# EUROPEAN PATENT SPECIFICATION

(11) **EP 3 717 589 B1**
(45) Date of publication and mention of the grant of the patent: **11.02.2026**
(21) Application number: 18882777.8
(22) Date of filing: 30.11.2018
(51) Int. Cl.: C09K 5/04, F25J 1/00, C10M 171/00

(54) **HEAT TRANSFER COMPOSITIONS, METHODS, AND SYSTEMS**
WÄRMETRANSFERZUSAMMENSETZUNGEN, VERFAHREN UND SYSTEME
COMPOSITIONS, PROCÉDÉS ET SYSTÈMES DE TRANSFERT DE CHALEUR

(30) Priority: 30.11.2017 US 201762592838 P
(43) Date of publication of application: 07.10.2020
(73) Proprietor: Honeywell International Inc., Morris Plains, NJ 07950 (US)
(72) Inventor: SETHI, Ankit, Morris Plains NJ 07950 (US); YANA MOTTA, Samuel, F., Morris Plains NJ 07950 (US); POTTKER, Gustavo, Morris Plains NJ 07950 (US); ZOU, Yang, Morris Plains NJ 07950 (US); VERA BECERRA, Elizabet, Del Carmen, Morris Plains NJ 07950 (US); SMITH, Gregory, Morris Plains NJ 07950 (US)
(74) Representative: Stepney, Gregory John
(86) International application number: PCT/US2018/063356
(87) International publication number: WO 2019/108962

(56) References cited:
- EP-A2- 1 985 680
- WO-A1-2016/194847
- US-A1- 2009 314 015
- US-A1- 2010 044 619
- US-A1- 2010 044 619
- US-A1- 2010 162 738
- US-A1- 2013 200 295
- US-A1- 2014 264 147

## Description

### Field of the Invention

This invention relates to compositions, methods, and systems having utility in refrigeration applications, with particular benefit in medium and low temperature refrigeration applications, and in particular aspects to refrigerant compositions for replacement of the refrigerant R-404A and/or R-22 for heating and cooling applications in medium and low temperature refrigerant systems, including systems designed for use with R-404A and/or R-22, and to retrofitting medium and low temperature refrigerant systems, including systems designed for use with R-404A and/or R-22.

### Background

Mechanical refrigeration systems, and related heat transfer devices such as heat pumps and air conditioners, using refrigerant liquids are well known in the art for industrial, commercial, and domestic uses. Several fluorocarbon-based fluids have found widespread use in many residential, commercial and industrial applications, including as the working fluid in systems such as air conditioning, heat pump and refrigeration systems. Because of certain suspected environmental problems, including the relatively high global warming potentials associated with the use of some hydrofluorocarbon ("HFC") based compositions that have heretofore been used in these applications, it has become increasingly desirable to use fluids having low global warming potentials ("GWP") in addition to low or zero ozone depletion potentials, such as hydrofluoroolefins (hereinafter "HFOs"). For example, a number of governments have signed the Kyoto Protocol to protect the global environment and setting forth a reduction of CO2 emissions (global warming). Thus, there is a need for alternatives to replace high global warming HFCs.

One important type of refrigeration system is known as a "low temperature refrigeration system." Such systems are particularly important to the food manufacture, distribution and retail industries in that they play a vital role in ensuring that food which reaches the consumer is both fresh and fit to eat. In such low temperature refrigeration systems, a commonly used refrigerant has been HFC-404A or R-404A (the combination of HFC-125:HFC-143a:HFC134a in an approximate 44:52:4 weight percent). R-404A has an estimated GWP of 3922.

It is generally considered important, however, with respect to heat transfer fluids, that any potential substitute must also possess those properties present in many of the most widely used HFC based fluids, such as excellent heat transfer properties, chemical stability, low- or no- toxicity, non-flammability, and lubricant compatibility, among others. In addition, any replacement or retrofit for R-404A would desirably be a good match for the operating conditions of R-404A in such systems order to avoid modification or redesign of the system.

With regard to efficiency in use, it is important to note that a loss in refrigerant thermodynamic performance or energy efficiency may have secondary environmental impacts through increased fossil fuel usage arising from an increased demand for electrical energy. In other words, a proposed new refrigerant that has an improved GWP and/or ODP relative to an existing fluid might nevertheless be less environmentally friendly than the fluid it is replacing if another characteristic of the proposed new fluid, such as efficiency in use, results in increased environmental emissions indirectly, such as by requiring higher fuel combustion to achieve the same level of refrigeration. It is thus seen that the selection of a replacement or retrofit fluid is a complicated, challenging endeavor that may not have predictable results.

Furthermore, it is generally considered desirable for HFC refrigerant substitutes to be effective without major engineering changes to conventional vapor compression technology currently used with HFC refrigerants.

Flammability is another important property for many applications. That is, it is considered either important or essential in some applications, including particularly in certain heat transfer applications, to use compositions that are non-flammable. One advantage of the use of non-flammable refrigerants in a heat transfer system is flame suppression equipment will not be required in such systems in order to mitigate possible risks associated with leakage of refrigerant from the system. This advantage is especially important in systems that would suffer from the secondary disadvantage of the increased system weight that would be associated with, for example, transport refrigeration systems.

As used herein, the term "non-flammable" refers to compounds or compositions which are determined to be non-flammable as determined in accordance with ASTM standard E-681-2009 Standard Test Method for Concentration Limits of Flammability of Chemicals (Vapors and Gases) at conditions described in ASHRAE Standard 34-2016 Designation and Safety Classification of Refrigerants and described in Appendix B1 to ASHRAE Standard 34-2016, referred to herein for convenience as "Non-Flammability Test". Unfortunately, many materials that might otherwise be desirable for use in refrigerant compositions are not non-flammable as that term is used herein. For example, fluoroalkane difluoroethane (HFC-152a) and fluoroalkene 1,1,1-trifluoropropene (HFO-1243zf) have flammability profiles which make them less preferred for use in some applications.

It is critical for maintenance of system efficiency and proper and reliable functioning of the compressor, that lubricant circulating in a vapor compression heat transfer system is returned to the compressor to perform its intended lubricating function. Otherwise, lubricant might accumulate and become lodged in the coils and piping of the system, including in the heat transfer components. Furthermore, when lubricant accumulates on the inner surfaces of the evaporator, it lowers the heat exchange efficiency of the evaporator, and thereby reduces the efficiency of the system. For these reasons, it is desirable for many systems that the refrigerant is miscible over at least the operating temperature range of the system with the lubricant that is used in the system.

Since R-404A is currently commonly used with polyol ester (POE) lubricating oils, a proposed R-404A replacement refrigerant is desirably miscible with POE lubricants over the temperature range in the system and for the concentrations of lubricant that are present in the system, particularly over the operating temperature ranges in the condenser and evaporator.

Since R-22 is currently commonly used with mineral oil (MO), alkyl benzene (AB) and polyol ester (POE) lubricating oils, a proposed R-22 replacement refrigerant is desirably miscible with each of MO, AB and POE lubricants over the temperature range in the system and for the concentrations of lubricant that are present in the system, particularly over the operating temperature ranges in the condenser and evaporator.

EP1985680 relates to compositions for use in refrigeration, air-conditioning, and heat pump systems wherein the composition comprises a fluoroolefin and at least one other component. The compositions of the present invention are useful in processes for producing cooling or heat, as heat transfer fluids, foam blowing agents, aerosol propellants, and fire suppression and fire extinguishing agents.

US2009314015 relates to a method of providing transport of a heat transfer fluid composition within a refrigeration or air conditioning system, comprising circulating a heat transfer fluid through one or more hoses of said system

US2010044619 relates to compositions comprising multi-fluorinated olefins and HFC-32 are disclosed, which are useful particularly for in stationary refrigeration and air conditioning equipment.

US2010162738 relates to a method of drying a fluid comprising a fluoropropene, which method comprises the step of contacting the fluid with a desiccant comprising molecular sieve having openings which have a size across their largest dimension of from about 3 Å to about 5 Å.

US2013200295 relates to working fluid compositions for heat transfer apparatuses, such as refrigeration systems, that include a refrigerant and an ester based lubricant.

US2014264147 relates to heat transfer compositions, methods and use wherein the composition comprising: (a) from about 5 to about 20% by weight of HFC-32; (b) from about 70% to about 90% by weight of HFO-1234ze; and (c) from about 5% to less than about 20% by weight of HFC-152a and/or HFC-134a.

WO2016194847 relates to a working medium for a heat cycle contains trifluoroethylene and a first component comprising at least one substance selected from carbon dioxide, fluoromethane, trifluoroiodomethane, methane, ethane, propane, helium, neon, argon, krypton, xenon, nitrogen, and ammonia.

Applicants have thus come to appreciate a need for compositions, and particularly heat transfer compositions, that are highly advantageous in heating and cooling systems and methods, particularly medium and low temperature refrigeration systems, and even more particularly medium and low temperature refrigeration systems, including medium and low temperature transport refrigeration systems, that have been designed for use with or are suitable for use with R-404A and/or R-22.

### Summary of the Invention

Applicants have found that the compositions of the present invention satisfy in an exceptional and unexpected way the need for alternatives and/or replacements for refrigerants, in particular R-404A and/or R-22, in heat transfer applications in which has been commonly used. In particular the present invention provides heat transfer fluids, heat transfer methods and heat transfer systems as defined in the appended claims that exhibit in preferred embodiments the desired mosaic of properties of excellent heat transfer properties (including being a close match in cooling efficiency and capacity to R-404A in such systems, including as a replacement for R-404A and/or R-22 in low and medium temperature refrigeration), chemical stability, low or no toxicity, non-flammability, lubricant miscibility and lubricant compatibility in combination with low Global Warming Potential (GWP) and near zero ODP.

The present invention relates to a refrigerant comprising at least about 98.5% by weight of the following three compounds, with each compound being present in the following relative percentages:
69.5%±2 by weight trifluoroiodomethane (CF₃I);
9±2% by weight 1,1,1,2-tetrafluoropropene (HFO-1234yf); and
21.5± 0.5% by weight difluoromethane (HFC-32). Refrigerants as described in this paragraph are sometimes referred to for convenience as **Refrigerant 5.**

The present invention relates to a refrigerant consisting essentially of the following three compounds, with each compound being present in the following relative percentages: 69.5%± 2 by weight trifluoroiodomethane (CF₃I);
9%±2 by weight 1,1,1,2-tetrafluoropropene (HFO-1234yf); and
21.5± 0.5% by weight difluoromethane (HFC-32). Refrigerants as described in this paragraph are sometimes referred to for convenience as **Refrigerant 6.**

The present invention relates to a refrigerant consisting essentially of the following three compounds, with each compound being present in the following relative percentages: 69.5%± 2 by weight trifluoroiodomethane (CF₃I);
9%±2 by weight 1,1,1,2-tetrafluoropropene (HFO-1234yf); and
21.5± 0.5% by weight difluoromethane (HFC-32). Refrigerants as described in this paragraph are sometimes referred to for convenience as **Refrigerant 7.**

The present invention relates to a refrigerant comprising at least about 98.5% by weight of the following three compounds, with each compound being present in the following relative percentages:
69.5±1% by weight trifluoroiodomethane (CF₃I);
9±1% by weight 1,1,1,2-tetrafluoropropene (HFO-1234yf); and
21±1% by weight difluoromethane (HFC-32). Refrigerants as described in this paragraph are sometimes referred to for convenience as **Refrigerant 10.**

The present invention relates to a refrigerant consisting essentially of the following three compounds, with each compound being present in the following relative percentages: 69.5±1% by weight trifluoroiodomethane (CF3I);
9±1% by weight 1,1,1,2-tetrafluoropropene (HFO-1234yf); and
21±1% by weight difluoromethane (HFC-32). Refrigerants as described in this paragraph are sometimes referred to for convenience as **Refrigerant 11.**

The present invention relates to a refrigerant consisting essentially of the following four compounds, with each compound being present in the following relative percentages:
69.5±1% by weight trifluoroiodomethane (CF3I);
9±1% by weight 1,1,1,2-tetrafluoropropene (HFO-1234yf); and
21.5±0.5% by weight difluoromethane (HFC-32). Refrigerants as described in this paragraph are sometimes referred to for convenience as **Refrigerant 12.**

### Brief Description of the Drawings

Figure 1 is a schematic representation of an exemplary heat transfer system useful in air conditioning, low temperature refrigeration and medium temperature refrigeration.
Figure 2 is a schematic representation of an exemplary heat transfer system useful in low and medium temperature refrigeration and which includes a vapor injector.
Figure 3 is a schematic representation of an exemplary heat transfer system useful in low and medium temperature refrigeration and which includes a liquid injector.
Figure 4 is a schematic representation of an exemplary heat transfer system useful in low and medium temperature refrigeration and which includes a suction line /liquid line heat exchanger.
Figure 5 is a schematic representation of an exemplary heat transfer system useful in low and medium temperature refrigeration and which includes a vapor injector and an oil separator.

### Detailed Description of the Invention

### Definitions:

For the purposes of this invention, the term **"about"** in relation to the amounts expressed in weight percent means that the amount of the component can vary by an amount of +/- 2% by weight.

For the purposes of this invention, the term **"about"** in relation to temperatures in degrees centigrade (°C) means that the stated temperature can vary by an amount of +/-5°C.

The term **"capacity"** is the amount of cooling provided, in BTUs/hr, by the refrigerant in the refrigeration system. This is experimentally determined by multiplying the change in enthalpy in BTU/Ib, of the refrigerant as it passes through the evaporator by the mass flow rate of the refrigerant. The enthalpy can be determined from the measurement of the pressure and temperature of the refrigerant. The capacity of the refrigeration system relates to the ability to maintain an area to be cooled at a specific temperature. The capacity of a refrigerant represents the amount of cooling or heating that it provides and provides some measure of the capability of a compressor to pump quantities of heat for a given volumetric flow rate of refrigerant. In other words, given a specific compressor, a refrigerant with a higher capacity will deliver more cooling or heating power.

The phrase **"coefficient of performance"** (hereinafter **"COP"**) is a universally accepted measure of refrigerant performance, especially useful in representing the relative thermodynamic efficiency of a refrigerant in a specific heating or cooling cycle involving evaporation or condensation of the refrigerant. In refrigeration engineering, this term expresses the ratio of useful refrigeration or cooling capacity to the energy applied by the compressor in compressing the vapor and therefore expresses the capability of a given compressor to pump quantities of heat for a given volumetric flow rate of a heat transfer fluid, such as a refrigerant. In other words, given a specific compressor, a refrigerant with a higher COP will deliver more cooling or heating power. One means for estimating COP of a refrigerant at specific operating conditions is from the thermodynamic properties of the refrigerant using standard refrigeration cycle analysis techniques (see for example, R.C. Downing, FLUOROCARBON REFRIGERANTS HANDBOOK, Chapter 3, Prentice-Hall, 1988).

The phrase **"discharge temperature"** refers to the temperature of the refrigerant at the outlet of the compressor. The advantage of a low discharge temperature is that it permits the use of existing equipment without activation of the thermal protection aspects of the system which are preferably designed to protect compressor components and avoids the use of costly controls such as liquid injection to reduce discharge temperature.

The phrase **"Global Warming Potential"** (hereinafter "GWP") was developed to allow comparisons of the global warming impact of different gases. Specifically, it is a measure of how much energy the emission of one ton of a gas will absorb over a given period of time, relative to the emission of one ton of carbon dioxide. The larger the GWP, the more that a given gas warms the Earth compared to CO2 over that time period. The time period usually used for GWP is 100 years. GWP provides a common measure, which allows analysts to add up emission estimates of different gases. See http://www.protocolodemontreal.org.br/site/images/publicacoes/setor_manufatura_equipam entos_refrigeracao_arcondicionado/Como_calcular_el_Potencial_de_Calentamiento_Atmos ferico_en_las_mezclas_de_refrigerantes.pdf

The term **"Occupational Exposure Limit (OEL)"** is determined in accordance with ASHRAE Standard 34-2016 Designation and Safety Classification of Refrigerants.

The term **"mass flow rate**" is the mass of refrigerant passing through a conduit per unit of time.

As used herein, the term **"replacement"** means the use of a composition of the present invention in a heat transfer system that had been designed for use with, or is commonly used with, or is suitable for use with another refrigerant. By way of example, when a refrigerant or heat transfer composition of the present invention is used in a heat transfer system that was designed for use with R-404A, then the refrigerant or heat transfer composition of the present invention is a replacement for R-404A in said system. It will thus be understood that the term "replacement" includes the use of the refrigerants and heat transfer compositions of the present invention in both new and existing systems that had been designed for use with, are commonly used with, or are suitable for use with R-404A.

As used herein the terms **"retrofit"** and **"retrofitting"** mean and refer to system and methods which involve removing at least a portion of an refrigerant from an existing heat transfer system and introducing a different refrigerant into the system such that the system is operable without requiring substantial engineering modification of the existing system, particularly without modification of the condenser, the evaporator and/or the expansion valve.

The phrase **"thermodynamic glide"** applies to zeotropic refrigerant mixtures that have varying temperatures during phase change processes in the evaporator or condenser at constant pressure.

The term **"low temperature refrigeration system"** refers to heat transfer systems which operate with a condensing temperature of from about 20°C to about 60°C and evaporating temperature of from about - 45°C up to and including -12°C.

The term **"medium temperature refrigeration system"** refers to heat transfer systems which operate with a condensing temperature of from about 20°C to about 60°C and evaporating temperature of from - 12°C to about 0°C.

The term **"medium temperature refrigeration system"** refers to heat transfer systems which operate with a condensing temperature of from about 20°C to about 60°C and evaporating temperature of from - 12°C to about 0°C.

The term **"residential air conditioning"** as used herein refers to heat transfer systems to condition air (cooling or heating) which operate with a condensing temperature of from about 20°C to about 70°C and evaporating temperature of from about 0°C to about 20°C.

The term **"residential air-to-water heat pump"** as used herein refers to heat transfer systems which transfer heat from outdoor air to water within the residence, which water is in turn used to condition the air in the residence and which operates with a condensing temperature of from about 20°C to about 70°C and evaporating temperature of from about -20°C to about 3°C.

The term **"air cooled chillers"** as used herein refers to heat transfer systems which transfer heat to or from process water (typically used to cool or heat the inside of buildings) and reject or absorb heat from ambient air and which operate with a condensing temperature of from about 20°C to about 70°C and evaporating temperature of from about 0°C to about 10°C.

The term **"supermarket refrigeration"** as used herein refers to commercial refrigeration systems that are used to maintain chilled or frozen food in both product display cases and storage refrigerators.

The term **"transport refrigeration"** as used herein refers to refrigeration system that are used in the transportation of chilled or frozen products by means of trucks, trailers, vans, intermodal containers and boxes. The term also includes the use of refrigeration and air conditioning on merchant, naval and fishing vessels above about 100 gross tonnes (GT) (over about 24 m in length).

### Refrigerants and Heat Transfer Compositions

Applicants have found that the refrigerant of the present invention, including each of Refrigerants 5-7 and 10-12 as described herein, is capable of providing exceptionally advantageous properties including: heat transfer properties, low or no toxicity, non-flammability, near zero ozone depletion potential ("ODP"), and lubricant compatibility, including miscibility with POE lubricants over the operating temperature and concentration ranges used in low and medium temperature refrigeration systems, as well as low GWP, especially as a replacement and as a retrofit and/or replacement for R-404A and/or R-22 in air conditioning systems (including residential air conditioning, chiller systems and air conditioning systems in trucks and buses), low temperature refrigeration systems and medium temperature refrigeration systems.

A particular advantage of the refrigerants of the present invention is that they are non-flammable when tested in accordance with the Non-Flammability Test defined herein. It will be appreciated by the skilled person that the flammability of a refrigerant is an important characteristic for use in certain important heat transfer applications. Thus, it is a desire in the art to provide a refrigerant composition which can be used as a replacement and/or a retrofit for R-404A and/or R-22 which has excellent heat transfer properties, low or no toxicity, near zero ODP, and lubricant compatibility, including miscibility with POE lubricants over the operating temperature and concentration ranges used in in air conditioning systems (including residential air conditioning, chiller systems and air conditioning systems in trucks and buses), low temperature refrigeration systems and medium temperature refrigeration systems, and which maintains non-flammability in use. This desirable advantage can be achieved met by the refrigerants of the present invention.

Another particular advantage of the refrigerants of the present invention, including each of Refrigerants 5-7 and 10-12, is that they exhibit an excellent match to the capacity and COP of R-404A and R-22 in air conditioning systems (including particularly residential air conditioning,air conditioning in trucks and buses and chiller systems), low temperature refrigeration systems and medium temperature systems, which provided the unexpected advantage of excellent performance in retrofit applications, especially for R-22 systems.

Applicants have found that the refrigerant compositions of the invention, including each of Refrigerants 5-7 and 10-12, are capable of achieving a difficult to achieve combination of properties including particularly low GWP. Thus, the compositions of the invention have a GWP of 175 or less and preferably 150 OR less.

In addition, the refrigerant compositions of the invention, including each of Refrigerants 5-7 and 10-12, have a low ODP. Thus, the refrigerant compositions of the invention have an ODP of not greater than 0.05, preferably not greater than 0.02, and more preferably about zero.

In addition, the refrigerant compositions of the invention, including each of Refrigerants 5-7 and 10-12, show acceptable toxicity and preferably have an OEL of greater than about 400. As those skilled in the art are aware, a non-flammable refrigerant that has an OEL of greater than about 400 is advantageous since it results in the refrigerant being classified in the desirable Class A of ASHRAE standard 34.

Applicants have found that the heat transfer compositions of the present invention, including heat transfer compositions that include each of Refrigerants 5-7 and 10-12 as described herein, is capable of providing exceptionally advantageous properties including: heat transfer properties, chemical stability under the conditions of use, low or no toxicity, non-flammability, near zero ozone depletion potential ("ODP"), and lubricant compatibility, including miscibility with POE lubricants over the operating temperature and concentration ranges used in air conditioning systems (including particularly residential air conditioning, air conditioning in trucks and buses and chiller systems), low temperature refrigeration systems and medium temperature systems, as well as low GWP, especially as a replacement for R-404A or R-22 in air conditioning systems (including particularly residential air conditioning, air conditioning in trucks and buses and chiller systems), and low and medium temperature refrigeration systems.

The heat transfer compositions can consist essentially of any refrigerant of the present invention, including each of Refrigerants 5-7 and 10-12.

The heat transfer compositions of the present invention can consist of any refrigerant of the present invention, including each of Refrigerants 5-7 and 10-12.

The heat transfer compositions of the invention may include other components for the purpose of enhancing or providing certain functionality to the compositions. Such other components may include one or more of lubricants, dyes, solubilizing agents, compatibilizers, stabilizers, antioxidants, corrosion inhibitors, extreme pressure additives and anti-wear additives.

### Lubricants

The heat transfer composition of the invention particularly comprises a refrigerant as described herein, including each of Refrigerants 5-7 and 10-12, and a lubricant. Applicants have found that the heat transfer compositions of the present invention, including heat transfer compositions that include a lubricant, and particularly a POE lubricant and each of Refrigerants 5-7 and 10-12, as described herein, is capable of providing exceptionally advantageous properties including, in addition to the advantageous properties identified herein with respect to the refrigerant, excellent refrigerant/lubricant compatibility, including miscibility with POE lubricants over the operating temperature and concentration ranges used in air conditioning systems (including particularly residential air conditioning, air conditioning in trucks and buses and chiller systems), and low and medium temperature refrigeration systems, especially as a replacement for and as a retrofit for R-404A/R-22 in residential air conditioning, low temperature refrigeration systems and medium temperature refrigeration systems.

In general, the heat transfer compositions of the present invention that include a lubricant comprise lubricant in amounts preferably of from about 0.1% by weight to about 5%, or from 0.1% by weight to about 1% by weight, or from 0.1% by weight to about 0.5% by weight, based on the weight of the heat transfer composition.

Commonly used refrigerant lubricants such as polyol esters (POEs), polyalkylene glycols (PAGs), silicone oils, mineral oil, alkylbenzenes (ABs), polyvinyl ethers (PVEs), polyethers (PEs) and poly(alpha-olefin) (PAO) that are used in refrigeration machinery may be used with the refrigerant compositions of the present invention.

Preferably the lubricants are selected from POEs, mineral oil, ABs, PVE, and PEs.

Preferably the lubricants are POEs.

In general, the heat transfer compositions of the present invention that include POE lubricant comprise POE lubricant in amounts preferably of from about 0.1% by weight to about 5%, or from 0.1% by weight to about 1% by weight, or from 0.1% by weight to about 0.5% by weight, based on the weight of the heat transfer composition.

Commercially available POEs that are preferred for use in the present heat transfer compositions include neopentyl glycol dipelargonate which is available as Emery 2917 (registered trademark) and Hatcol 2370 (registered trademark) and pentaerythritol derivatives including those sold under the trade designations Emkarate RL32-3MAF and Emkarate RL68H by CPI Fluid Engineering. Emkarate RL32-3MAF and Emkarate RL68H are preferred POE lubricants having the properties identified below:

| **Property** | **RL32-3MAF** | **RL68H** |
|---|---|---|
| Viscosity @ 40°C (ASTM D445), cSt | about 31 | about 67 |
| Viscosity @ 100°C (ASTM D445), cSt | about 5.6 | about 9.4 |
| Pour Point (ASTM D97), °C | about -40 | about -40 |

Commercially available polyvinyl ethers that are preferred for use in the present heat transfer compositions include those lubricants sold under the trade designations FVC32D and FVC68D, from Idemitsu.

Commercially available mineral oils that are preferred for use in the present heat transfer compositions include Witco LP 250 (registered trademark) from Witco, Suniso 3GS from Witco and Calumet R015 from Calumet. Commercially available alkylbenzene lubricants include Zerol 150 (registered trademark) and Zerol 300^{®} from Shrieve Chemical.

A preferred heat transfer composition comprises Refrigerant 5 and POE lubricant.

A preferred heat transfer composition comprises Refrigerant 6 and POE lubricant.

A preferred heat transfer composition comprises Refrigerant 7 and POE lubricant.

A preferred heat transfer composition comprises Refrigerant 10 and POE lubricant.

A preferred heat transfer composition comprises Refrigerant 11 and POE lubricant.

A preferred heat transfer composition comprises Refrigerant 12 and POE lubricant.

A lubricant consisting essentially of a POE having a viscosity at 40°C measured in accordance with ASTM D445 of from about 30 to about 70 is referred to herein as **Lubricant 1.**

A preferred heat transfer composition comprises Refrigerant 5 and Lubricant 1.

A preferred heat transfer composition comprises Refrigerant 6 and Lubricant 1

A preferred heat transfer composition comprises Refrigerant 7 and Lubricant 1.

A preferred heat transfer composition comprises Refrigerant 10 and Lubricant 1.

A preferred heat transfer composition comprises Refrigerant 11 and Lubricant 1.

A preferred heat transfer composition comprises Refrigerant 12 and Lubricant 1.

A lubricant consisting essentially of a POE having a viscosity at 40°C measured in accordance with ASTM D445 of from about 30 to about 70 and which is present in an amount of from about 0.1% to about 1% based on the weight of the heat transfer composition, is referred to herein as **Lubricant 2.**

A preferred heat transfer composition comprises Refrigerant 5 and Lubricant 2.

A preferred heat transfer composition comprises Refrigerant 6 and Lubricant 2.

A preferred heat transfer composition comprises Refrigerant 7 and Lubricant 2.

A preferred heat transfer composition comprises Refrigerant 10 and Lubricant 2.

A preferred heat transfer composition comprises Refrigerant 11 and Lubricant 2.

A preferred heat transfer composition comprises Refrigerant 12 and Lubricant 2.

A preferred heat transfer composition comprises a refrigerant of the present invention, including each of Refrigerants 5-7 and 10-12, and from about 0.1% to about 5%, or from about 0.1% to about 1%, or from about 0.1% to about 0.5%, of a lubricant, wherein said percentage is based on the weight of the lubricant in the heat transfer composition.

A preferred heat transfer composition comprises a refrigerant of the present invention, including each of Refrigerants 5-7 and 10-12, and from about 0.1% to about 5%, or from about 0.1% to about 1%, or from about 0.1% to about 0.5%, of a POE lubricant, wherein said percentage is based on the weight of the lubricant in the heat transfer composition.

A preferred heat transfer composition comprises a refrigerant of the present invention, including each of Refrigerants 5-7 and 10-12, and from about 0.1% to about 5% or from about 0.1% to about 1% of a Lubricant 1, wherein said percentage is based on the weight of the lubricant in the heat transfer composition.

A lubricant consisting essentially of a POE having a viscosity at 40°C measured in accordance with ASTM D445 of from about 30 to about 70 and which is present in an amount of from about 0.1% to about 0.5% based on the weight of the heat transfer composition, is referred to herein as **Lubricant 3.**

A preferred heat transfer composition comprises a refrigerant of the present invention, including each of Refrigerants 5-7 and 10-12, and Lubricant 3.

A lubricant consisting essentially of a POE having a viscosity at 40°C measured in accordance with ASTM D445 of from about 30 to about 70 and which is present in an amount of from about 0.1% to about 0.5% based on the weight of the heat transfer composition, is referred to herein as **Lubricant 4.**

A preferred heat transfer composition comprises a refrigerant of the present invention, including each of Refrigerants 5-7 and 10-12, and Lubricant 4.

### Stabilizers

The heat transfer composition of the invention particularly comprises a refrigerant as discussed herein, including each of Refrigerants 5-7 and 10-12, and a stabilizer. Applicants have found that the heat transfer compositions of the present invention, including heat transfer compositions that include a stabilizer and each of Refrigerants 5-7 and 10-12 as described herein, is capable of providing exceptionally advantageous properties including, in addition to the advantageous properties identified herein with respect to the refrigerant, chemical stability over the operating temperature and concentration ranges used in air conditioning systems (including particularly residential air conditioning, air conditioning in trucks and buses and chiller systems), and low and medium temperature refrigeration systems, especially as a replacement for R-404A/R-22 in air conditioning systems (including particularly residential air conditioning, air conditioning in trucks and buses and chiller systems), and low and medium temperature refrigeration systems.

In preferred embodiments the stabilizer comprises one or more of alkylated naphthalene compounds, diene-based compounds, phenol-based compounds and isobutylene. Other compounds that may be used in the stabilizer include phosphorus-based compounds, nitrogen-based compounds and epoxide compounds. Preferred compounds within each of these groups are described below.

### Alkylated Naphthalenes

Applicants have surprisingly and unexpectedly found that alkylated Naphthalenes are highly effective as stabilizers for the heat transfer compositions of the present invention. As used herein, the term "alkylated naphthalene" refers to compounds having the following structure: 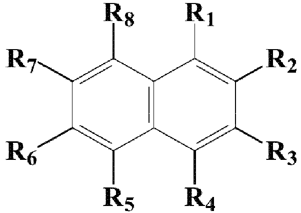 where each R₁ - R₈ is independently selected from linear alkyl group, a branched alkyl group and hydrogen. The particular length of the alkyl chains and the mixtures or branched and straight chains and hydrogens can vary within the scope of the present invention, and it will be appreciated and understood by those skilled in the art that such variation is reflected the physical properties of the alkylated naphthalene, including in particular the viscosity of the alkylated compound, and producers of such materials frequently define the materials by reference to one or more of such properties as an alternative the specification of the particular R groups.

Applicants have found unexpected, surprising and advantageous results are associated with the use of alkylated naphthalene as a stabilizer according to the present invention having the following properties, and alkylated naphthalene compounds having the indicated properties are referred to for convenience herein as Alkylated Naphthalene 1 - Alkylated Naphthalene 5 as indicated respectively in rows 1 - 5 in the Alkylated Naphthalene Property Table 1 below:

**ALKYLATED NAPHTHALENE PROPERTY TABLE 1**

| **Property** | **Alkylated Naphthalene 1 (AN1)** | **Alkylated Naphthalene 2** | **Alkylated Naphthalene 3** | **Alkylated Naphthalene 4** | **Alkylated Naphthalene 5** |
|---|---|---|---|---|---|
| | | **(AN2)** | **(AN3)** | **(AN4)** | **(AN5)** |
| Viscosity @ 40°C (ASTM D445), cSt | 20 - 200 | 20 - 100 | 20 - 50 | 30 - 40 | about 36 |
| Viscosity @ 100°C (ASTM D445), cSt | 3-20 | 3-10 | 3-8 | 5-7 | about 5.6 |
| Pour Point (ASTM D97), °C | -50 to -20 | -45 to -25 | -40 to -30 | -35 to -30 | about -33 |

As used herein in connection with viscosity at 40°C measured according to ASTM D445, the term "about" means +/- 4 cSt.

As used herein in connection with viscosity at 100°C measured according to ASTM D445, the term "about" means +/- 0.4 cSt.

As used herein in connection with pour point as measured according to ASTM D97, the term "about" means +/- 5°C.

Applicants have also found that unexpected, surprising and advantageous results are associated with the use of alkylated naphthalene as a stabilizer according to the present invention having the following properties, and alkylated naphthalene compounds having the indicated properties are referred to for convenience herein as Alkylated Naphthalene 6 - Alkylated Naphthalene 10 as indicated respectively in rows 6 - 10 in the Alkylated Naphthalene Property Table 2 below:

**ALKYLATED NAPHTHALENE PROPERTY TABLE 2**

| **Property** | **Alkylated Naphthalene 6 (AN6)** | **Alkylated Naphthalene 7 (AN7)** | **Alkylated Naphthalene 8 (AN8)** | **Alkylated Naphthalene 9 (AN9)** | **Alkylated Naphthalene 10 (AN10)** |
|---|---|---|---|---|---|
| Viscosity @ 40°C (ASTM D445), cSt | 20 - 200 | 20 - 100 | 20 - 50 | 30 - 40 | about 36 |
| Viscosity @ 100°C (ASTM D445), cSt | 3-20 | 3-10 | 3-8 | 5 - 7 | about 5.6 |
| Aniline Point (ASTM D611), °C | 40 - 110 | 50 - 90 | 50 - 80 | 60 - 70 | about 36 |
| Noack Volatility CEC L40 (ASTM D6375), wt% | 1 -50 | 5-30 | 5-15 | 10-15 | about 12 |
| Pour Point (ASTM D97), °C | -50 to -20 | -45 to -25 | -40 to -30 | -35 to -30 | about -33 |
| Flash Point (ASTM D92) ), °C | 200 - 300 | 200 - 270 | 220 - 250 | 230 - 240 | about 236 |

Examples of alkylated naphthalenes within the meaning of Alkylated Naphthalene 1 through Alkylated Naphthalene 6 include those sold by King Industries under the trade designations NA-LUBE KR-007A;KR- 008, KR-009;KR-015; KR-019; KR-005FG; KR-015FG; and KR-029FG.

Examples of alkylated Naphthalenes within the meaning of Alkylated Naphthalene 2 and Alkylated Naphthalene 7 include those sold by King Industries under the trade designations NA-LUBE KR-007A;KR- 008, KR-009; and KR-005FG.

An example of an alkylated naphthalene that is within the meaning of Alkylated Naphthalene 5 and Alkylated Naphthalene 10 includes the product sold by King Industries under the trade designation NA-LUBE KR-008.

The alkylated naphthalene is preferably in the heat transfer compositions of the present invention that include a refrigerant of the present invention, including each of Refrigerants 5-7 and 10-12, wherein the alkylated naphthalene is present in an amount of from 0.01% to about 10%, or from about 1.5% to about 4.5%, or from about 2.5% to about 3.5%, where amounts are in percent by weight based on the amount of alkylated naphthalene plus refrigerant.

### Diene-based Compounds

The diene-based compounds can include C3 to C15 dienes and to compounds formed by reaction of any two or more C3 to C4 dienes. Preferably, the diene-based compounds are selected from the group consisting of allyl ethers, propadiene, butadiene, isoprene, and terpenes. The diene-based compounds are preferably terpenes, which include but are not limited to terebene, retinal, geraniol, terpinene, delta-3 carene, terpinolene, phellandrene, fenchene, myrcene, farnesene, pinene, nerol, citral, camphor, menthol, limonene, nerolidol, phytol, carnosic acid, and vitamin A1. Preferably, the stabilizer is farnesene. Preferred terpene stabilizers are disclosed in US Provisional Patent Application No. 60/638,003 filed on December 12, 2004, published as US 2006/0167044A1,. In addition, the diene-based compounds can be provided in the heat transfer composition in an amount greater than 0 and preferably from 0.0001% by weight to about 5% by weight, preferably 0.001% by weight to about 2.5% by weight, and more preferably from 0.01% to about 1% by weight. In each case, percentage by weight refers to the weight of the diene-based compound(s) plus refrigerant in the heat transfer composition.

### Phenol-based Compounds

The phenol-based compound can be one or more compounds selected from 4,4'-methylenebis(2,6-di-tert-butylphenol); 4,4'-bis(2,6-di-tert-butylphenol); 2,2- or 4,4-biphenyldiols, including 4,4'-bis(2-methyl-6-tert-butylphenol); derivatives of 2,2- or 4,4-biphenyldiols; 2,2'-methylenebis(4-ethyl-6-tertbutylphenol); 2,2'-methylenebis(4-methyl-6-tert-butylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-tert-butyl-4-methylphenol (BHT); 2,6-di-tert-butyl-4-ethylphenol: 2,4-dimethyl-6-tert-butylphenol; 2,6-di-tert-alpha-dimethylamino-p-cresol; 2,6-di-tert-butyl-4(N,N'-dimethylaminomethylphenol); 4,4'-thiobis(2-methyl-6-tert-butylphenol); 4,4'-thiobis(3-methyl-6-tert-butylphenol); 2,2'-thiobis(4-methyl-6-tert-butylphenol); bis(3-methyl-4-hydroxy-5-tert-butylbenzyl) sulfide; bis (3,5-di-tert-butyl-4-hydroxybenzyl)sulfide, tocopherol, hydroquinone, 2,2'6,6'-tetra-tert-butyl-4,4'-methylenediphenol and t-butyl hydroquinone, and preferably BHT.

The phenol compounds can be provided in the heat transfer composition in an amount of greater than 0 and preferably from 0.0001% by weight to about 5% by weight, preferably 0.001% by weight to about 2.5% by weight, and more preferably from 0.01% to about 1% by weight. In each case, percentage by weight refers to the weight of the phenol-based compound(s) plus refrigerant in the heat transfer composition.

### The Phosphorus-based Compounds

The phosphorus compound can be a phosphite or a phosphate compound. For the purposes of this invention, the phosphite compound can be a diaryl, dialkyl, triaryl and/or trialkyl phosphite, and/or a mixed aryl/alkyl di- or tri-substituted phosphite, in particular one or more compounds selected from hindered phosphites, tris-(di-tert-butylphenyl)phosphite, di-n-octyl phophite, iso-octyl diphenyl phosphite, iso-decyl diphenyl phosphite, tri-iso-decyl phosphate, triphenyl phosphite and diphenyl phosphite, particularly diphenyl phosphite. The phosphate compounds can be a triaryl phosphate, trialkyl phosphate, alkyl mono acid phosphate, aryl diacid phosphate, amine phosphate, preferably triaryl phosphate and/or a trialkyl phosphate, particularly tri-n-butyl phosphate.

The phosphorus compounds can be provided in the heat transfer composition in an amount of greater than 0 and preferably from 0.0001% by weight to about 5% by weight, preferably 0.001% by weight to about 2.5% by weight, and more preferably from 0.01% to about 1% by weight. In each case, by weight refers to weight of the phosphorous-based compound(s) plus refrigerant in the heat transfer composition.

### The Nitrogen Compound

When the stabilizer includes a nitrogen compound, the stabilizer may comprise an amine based compound such as one or more secondary or tertiary amines selected from diphenylamine, p-phenylenediamine, triethylamine, tributylamine, diisopropylamine, triisopropylamine and triisobutylamine. The amine based compound can be an amine antioxidant such as a substituted piperidine compound, i.e. a derivative of an alkyl substituted piperidyl, piperidinyl, piperazinone, or alkyoxypiperidinyl, particularly one or more amine antioxidants selected from 2,2,6,6-tetramethyl-4-piperidone, 2,2,6,6-tetramethyl-4-piperidinol; bis-(1,2,2,6,6-pentamethylpiperidyl)sebacate; di(2,2,6,6-tetramethyl-4-piperidyl)sebacate, poly(N-hydroxyethyl-2,2,6,6-tetramethyl-4-hydroxy-piperidyl succinate; alkylated paraphenylenediamines such as N-phenyl-N'-(1,3-dimethyl-butyl)-p-phenylenediamine or N,N'-di-sec-butyl-p-phenylenediamine and hydroxylamines such as tallow amines, methyl bis tallow amine and bis tallow amine, or phenol-alpha-napththylamine or Tinuvin^{®}765 (Ciba), BLS^{®}1944 (Mayzo Inc) and BLS ^{®} 1770 (Mayzo Inc). For the purposes of this invention, the amine based compound also can be an alkyldiphenyl amine such as bis (nonylphenyl amine), dialkylamine such as (N-(1-methylethyl)-2-propylamine, or one or more of phenyl-alpha-naphthyl amine (PANA), alkylphenyl-alpha-naphthyl-amine (APANA), and bis (nonylphenyl) amine. Preferably the amine based compound is one or more of phenyl-alpha-naphthyl amine (PANA), alkyl-phenyl-alpha-naphthyl-amine (APANA) and bis (nonylphenyl) amine, and more preferably phenyl-alpha-naphthyl amine (PANA).

Alternatively, or in addition to the nitrogen compounds identified above, one or more compounds selected from dinitrobenzene, nitrobenzene, nitromethane, nitrosobenzene, and TEMPO [(2,2,6,6-tetramethylpiperidin-1-yl)oxyl] may be used as the stabilizer. The nitrogen compounds can be provided in the heat transfer composition in an amount of greater than 0 and from 0.0001% by weight to about 5% by weight, preferably 0.001% by weight to about 2.5% by weight, and more preferably from 0.01% to about 1% by weight. In each case, percentage by weight refers to the weight of the nitrogen-based compound(s) plus refrigerant in the heat transfer composition.

### Isobutylene

Isobutylene can be provided in the heat transfer composition in an amount of greater than 0 and from 0.0001% by weight to about 5% by weight, preferably from 0.001% by weight to about 2.5% by weight, and more preferably from 0.01% to about 1% by weight. In each case, percentage by weight refers to the weight of the isobutylene plus refrigerant in the heat transfer composition.

### Epoxides and others

Useful epoxides include aromatic epoxides, alkyl epoxides, and alkyenyl epoxides.

### Combinations of Stabilizers

Preferably, the heat transfer composition comprises a refrigerant of the present invention, including each of Refrigerants 5-7 and 10-12, and a stabilizer composition comprising a diene-based compound and an alkylated naphthalene . A stabilizer as described in this paragraph is referred to herein as **Stabilizer 1.**

The heat transfer composition of the invention can preferably comprise Refrigerant 5 and Stabilizer 1.

The heat transfer composition of the invention can preferably comprise Refrigerant 6 and Stabilizer 1.

The heat transfer composition of the invention can preferably comprise Refrigerant 7 and Stabilizer 1.

The heat transfer composition of the invention can preferably comprise Refrigerant 10 and Stabilizer 1.

The heat transfer composition of the invention can preferably comprise Refrigerant 11 and Stabilizer 1.

The heat transfer composition of the invention can preferably comprise Refrigerant 12 and Stabilizer 1.

Preferably, the heat transfer composition comprises a refrigerant of the present invention, including each of Refrigerants 5-7 and 10-12, and a stabilizer composition comprising a diene-based compound, an alkylated naphthalene selected from Alkylated Napthalene 1, and a phenol-based compound. A stabilizer as described in this paragraph is referred to herein as **Stabilizer 2.**

The heat transfer composition of the invention can preferably comprise Refrigerant 5 and Stabilizer 2.

The heat transfer composition of the invention can preferably comprise Refrigerant 6 and Stabilizer 2.

The heat transfer composition of the invention can preferably comprise Refrigerant 7 and Stabilizer 2.

The heat transfer composition of the invention can preferably comprise Refrigerant 10 and Stabilizer 2.

The heat transfer composition of the invention can preferably comprise Refrigerant 11 and Stabilizer 2.

The heat transfer composition of the invention can preferably comprise Refrigerant 12 and Stabilizer 2.

Preferably, the heat transfer composition comprises a refrigerant of the present invention, including each of Refrigerants 5-7 and 10-12, and a stabilizer composition comprising farnesene, and Alkylated Naphthalene 4 and BHT. A stabilizer as described in this paragraph is referred to herein as **Stabilizer 3.**

The heat transfer composition of the invention can preferably comprise Refrigerant 5 and Stabilizer 3.

The heat transfer composition of the invention can preferably comprise Refrigerant 6 and Stabilizer 3.

The heat transfer composition of the invention can preferably comprise Refrigerant 7 and Stabilizer 3.

The heat transfer composition of the invention can preferably comprise Refrigerant 10 and Stabilizer 3.

The heat transfer composition of the invention can preferably comprise Refrigerant 11 and Stabilizer 3.

The heat transfer composition of the invention can preferably comprise Refrigerant 12 and Stabilizer 3.

The heat transfer composition can comprises a refrigerant of the present invention, including each of Refrigerants 5-7 and 10-12, and a stabilizer composition comprising farnesene, and alkylated naphthalene selected from Alkylated Naphthalene 1, and BHT. A stabilizer as described in this paragraph is referred to herein as **Stabilizer 4.**

The heat transfer composition can comprises a refrigerant of the present invention, including each of Refrigerants 5-7 and 10-12, and a stabilizer composition consists essentially of farnesene, Alkylated Naphthalene 5, and BHT. A stabilizer as described in this paragraph is referred to herein as **Stabilizer 5.**

The heat transfer composition can comprises a refrigerant of the present invention, including each of Refrigerants 5-7 and 10-12, and a stabilizer composition consists of farnesene, Alkylated Naphthalene 5, and BHT. A stabilizer as described in this paragraph is referred to herein as **Stabilizer 6.**

The heat transfer composition can comprises a refrigerant of the present invention, including each of Refrigerants 5-7 and 10-12, and a stabilizer composition comprising isobutylene and an alkylated naphthalene selected from Alkylated Naphthalenes 1. A stabilizer as described in this paragraph is referred to herein as **Stabilizer 7.**

The heat transfer composition can comprises a refrigerant of the present invention, including each of Refrigerants 5-7 and 10-12, and a stabilizer composition comprising isobutylene, Alkylated Naphthalene 5 and BHT. A stabilizer as described in this paragraph is referred to herein as **Stabilizer 8.**

The heat transfer composition can comprises a refrigerant of the present invention, including each of Refrigerants 5-7 and 10-12, and a stabilizer composition consists essentially of isobutylene, Alkylated Naphthalene 5, and BHT. A stabilizer as described in this paragraph is referred to herein as **Stabilizer 9.**

The heat transfer composition can comprises a refrigerant of the present invention, including each of Refrigerants 5-7 and 10-12, and a stabilizer composition consisting of isobutylene, Alkylated Naphthalene 5 and BHT. A stabilizer as described in this paragraph is referred to herein as **Stabilizer 10.**

The heat transfer composition of the invention can comprise a refrigerant of the present invention, including each of Refrigerants 5-7 and 10-12, and a stabilizer composition comprising Alkylated Naphthalene 4, wherein the alkylated naphthalene is present in an amount of from 0.0001% by weight to about 5% by weight based on the weight of the heat transfer composition,. A stabilizer as described in this paragraph within the indicated amounts in a heat transfer composition is referred to herein as **Stabilizer 11.**

The heat transfer composition of the invention can preferably comprise a refrigerant of the present invention, including each of Refrigerants 5-7 and 10-12, and a stabilizer composition comprising Alkylated Naphthalene 5, wherein the alkylated naphthalene is present in an amount of from 0.0001% by weight to about 5% by weight based on the weight of the heat transfer composition. A stabilizer as described in this paragraph within the indicated amounts in a heat transfer composition is referred to herein as **Stabilizer 12.**

The heat transfer composition of the invention can preferably comprise a refrigerant of the present invention, including each of Refrigerants 5-7 and 10-12, and a stabilizer composition comprising BHT, wherein said BHT is present in an amount of from about 0.0001% by weight to about 5% by weight based on the weight of heat transfer composition. A stabilizer as described in this paragraph within the indicated amounts in a heat transfer composition is referred to herein as **Stabilizer 13.**

The heat transfer composition of the invention can preferably comprise a refrigerant of the present invention, including each of Refrigerants 5-7 and 10-12, and a stabilizer composition comprising farnesene, Alkylated Naphthalene 4 and BHT, wherein the farnesene is provided in an amount of from about 0.0001% by weight to about 5% by weight, the Alkylated Naphthalene 4 is provided in an amount of from about 0.0001% by weight to about 10% by weight, and the BHT is provided in an amount of from about 0.0001% by weight to about 5% by weight, with the percentages being based on the weight of the heat transfer composition. A stabilizer as described in this paragraph within the indicated amounts in a heat transfer composition is referred to herein as **Stabilizer 14.**

The heat transfer composition of the invention can comprise a refrigerant of the present invention, including each of Refrigerants 5-7 and 10-12, and a stabilizer composition comprising farnesene, Alkylated Naphthalene 4 and BHT, wherein the farnesene is provided in an amount of from 0.001% by weight to about 2.5% by weight , the Alkylated Naphthalene 4 is provided in an amount of from 0.001% by weight to about 10% by weight, and the BHT is provided in an amount of from 0.001% by weight to about 2.5% by weight, with the percentages being based on the weight of the heat transfer composition. A stabilizer as described in this paragraph within the indicated amounts in a heat transfer composition is referred to herein as **Stabilizer 15.**

The heat transfer composition of the invention can more preferably comprise any refrigerant of the present invention, including each of Refrigerants 5-7 and 10-12, and a stabilizer composition comprising farnesene, Alkylated Naphthalene 4 and BHT, wherein the farnesene is provided in an amount of from 0.001% by weight to about 2.5% by weight, the Alkylated Naphthalene 4 is provided in an amount of from 1.5% by weight to about 4.5% by weight, and the BHT is provided in an amount of from 0.001% by weight to about 2.5% by weight, with the percentages being based on the weight of the heat transfer composition. A stabilizer as described in this paragraph within the indicated amounts in a heat transfer composition is referred to herein as **Stabilizer 16.**

The heat transfer composition of the invention can more preferably comprise any a refrigerant of the present invention, including each of Refrigerants 5-7 and 10-12, and a stabilizer composition comprising farnesene, Alkylated Naphthalene 5 and BHT, wherein the farnesene is provided in an amount of from 0.001% by weight to about 2.5% by weight, the Alkylated Naphthalene 5 is provided in an amount of from 2.5% by weight to 3.5% by weight, and the BHT is provided in an amount of from 0.001% by weight to about 2.5% by weight, with the percentages being based on the weight of heat transfer composition. A stabilizer as described in this paragraph within the indicated amounts in a heat transfer composition is referred to herein as **Stabilizer 17.**

### Heat Transfer Compositions Comprising Refrigerant, Lubricant and Stabilizer

The heat transfer composition of the invention can comprise any of the refrigerants of the present invention, including each of Refrigerants 5-7 and 10-12, and any lubricant of the invention, including each of Lubricants 1 - 3, and a stabilizer of the present invention, including each of Stabilizers 1 - 17.

The heat transfer composition of the invention can comprise any of the refrigerants of the present invention, including each of Refrigerants 5-7 and 10-12, POE lubricant and Stabilizer 1.

The heat transfer composition of the invention can comprise any of the refrigerants of the present invention, including each of Refrigerants 5-7 and 10-12, Lubricant 1 and Stabilizer 1.

The heat transfer composition of the invention can comprise any of the refrigerants of the present invention, including each of Refrigerants 5-7 and 10-12, Lubricant 2 and Stabilizer 1.

The heat transfer composition of the invention can comprise any of the refrigerants of the present invention, including each of Refrigerants 5-7 and 10-12, Lubricant 3 and Stabilizer 1.

The heat transfer composition of the invention can comprise any of the refrigerants of the present invention, including each of Refrigerants 5-7 and 10-12, POE lubricant and Stabilizer 2.

The heat transfer composition of the invention can comprise any of the refrigerants of the present invention, including each of Refrigerants 5-7 and 10-12, Lubricant 1 and Stabilizer 2.

The heat transfer composition of the invention can comprise any of the refrigerants of the present invention, including each of Refrigerants 5-7 and 10-12, Lubricant 2 and Stabilizer 2.

The heat transfer composition of the invention can comprise any of the refrigerants of the present invention, including each of Refrigerants 5-7 and 10-12, Lubricant 3 and Stabilizer 2.

The heat transfer composition of the invention can comprise any of the refrigerants of the present invention, including each of Refrigerants 5-7 and 10-12, POE lubricant and Stabilizer 3.

The heat transfer composition of the invention can comprise any of the refrigerants of the present invention, including each of Refrigerants 5-7 and 10-12, Lubricant 1 and Stabilizer 3.

The heat transfer composition of the invention can comprise any of the refrigerants of the present invention, including each of Refrigerants 5-7 and 10-12, Lubricant 2 and Stabilizer 3.

The heat transfer composition of the invention can comprise any of the refrigerants of the present invention, including each of Refrigerants 5-7 and 10-12, Lubricant 3 and Stabilizer 3.

The heat transfer composition of the invention can comprise any of the refrigerants of the present invention, including each of Refrigerants 5-7 and 10-12, and Lubricant 1, and Stabilizer 14.

The heat transfer composition of the invention can comprise any of the refrigerants of the present invention, including each of Refrigerants 5-7 and 10-12, Lubricant 1 and Stabilizer 14.

The heat transfer composition of the invention can comprise any of the refrigerants of the present invention, including each of Refrigerants 5-7 and 10-12, Lubricant 2 and Stabilizer 14.

The heat transfer composition of the invention can comprise any of the refrigerants of the present invention, including each of Refrigerants 5-7 and 10-12, Lubricant 3 and Stabilizer 14.

The heat transfer composition of the invention can comprise Refrigerant 5, Stabilizer 1, and Lubricant 1.

The heat transfer composition of the invention can comprise Refrigerant 6, Stabilizer 1, and Lubricant 1.

The heat transfer composition of the invention can comprise Refrigerant 7, Stabilizer 1, and Lubricant 1.

The heat transfer composition of the invention can comprise Refrigerant 10, Stabilizer 1, and Lubricant 1.

The heat transfer composition of the invention can comprise Refrigerant 11, Stabilizer 1, and Lubricant 1.

The heat transfer composition of the invention can comprise Refrigerant 12, Stabilizer 1, and Lubricant 1.

The heat transfer composition of the invention can comprise Refrigerant 5, POE lubricant, and stabilizer selected from Stabilizer 1, Stabilizer 2, Stabilizer 3, Stabilizer 7, and Stabilizer 14.

The heat transfer composition of the invention can comprise Refrigerant 5, Lubricant 1, and stabilizer selected from Stabilizer 1, Stabilizer 2, Stabilizer 3, Stabilizer 7, and Stabilizer 14.

The heat transfer composition of the invention can comprise Refrigerant 5, Lubricant 2, and stabilizer selected from Stabilizer 1, Stabilizer 2, Stabilizer 3, Stabilizer 7, and Stabilizer 14.

The heat transfer composition of the invention can comprise Refrigerant 10, POE lubricant, and stabilizer selected from Stabilizer 1, Stabilizer 2, Stabilizer 3, Stabilizer 7, and Stabilizer 14.

The heat transfer composition of the invention can comprise Refrigerant 10, Lubricant 1, and stabilizer selected from Stabilizer 1, Stabilizer 2, Stabilizer 3, Stabilizer 7, and Stabilizer 14.

The heat transfer composition of the invention can comprise Refrigerant 10, Lubricant 2, and stabilizer selected from Stabilizer 1, Stabilizer 2, Stabilizer 3, Stabilizer 7, and Stabilizer 14.

Other additives not mentioned herein can also be included by those skilled in the art in view of the teaching contained herein without departing from the novel and basic features of the present invention.

Combinations of surfactants and solubilizing agents may also be added to the present compositions to aid oil solubility as disclosed in US Patent No. 6,516,837.

### Methods, Uses and Systems

The refrigerants and heat transfer compositions as disclosed herein are provided for use in air conditioning applications, including: mobile air conditioning (including air conditioning in buses and trains); stationary air conditioning, including residential air conditioning (including particularly residential air conditioning and in particular ducted split or a ductless split air conditioning system); industrial air conditioning (including chiller systems); commercial air conditioning systems (including particularly chiller systems, packaged rooftop units and a variable refrigerant flow (VRF) systems).

The refrigerants and heat transfer compositions as disclosed herein are provided for use in heat pumps, including: mobile heat pumps (including electrical vehicle heat pumps); residential heat pumps (including air residential air to water heat pump/hydronic systems); and commercial air source, water source or ground source heat pump systems.

The refrigerants and heat transfer compositions as disclosed herein are provided for use in chillers, including particularly positive displacement chillers, air cooled or water cooled direct expansion chillers (which can be either modular or conventionally singularly packaged),

The refrigerants and heat transfer compositions as disclosed herein are provided for use in heat transfer applications, including low temperature refrigeration systems, including low temperature commercial refrigeration systems (including low temperature super market refrigeration systems) and low temperature transportation systems).

The refrigerants and heat transfer compositions as disclosed herein are provided for use in medium temperature refrigeration systems, including medium temperature commercial refrigeration systems (including medium temperature super market refrigeration systems and medium temperature transportation systems).

The compositions of the invention may be employed in systems which are suitable for use with R-404 refrigerant, such as new and existing heat transfer systems.

The compositions of the invention may be employed in systems which are suitable for use with R-22, such as new and existing heat transfer systems.

Any reference to the heat transfer composition of the invention refers to each and any of the heat transfer compositions as described herein. Thus, for the foregoing or following discussion of the uses or applications of the composition of the invention, the heat transfer composition may comprise or consist essentially of, or consist of any of the refrigerants described herein in combination with the stabilizers and lubricants discussed herein, including: (i) each of Refrigerants 5-7 and 10-12; (ii) any combination of each of Refrigerants 5-7 and 10-12 and each of Stabilizers 1 - 19; (iii) any combination of each of Refrigerants 5-7 and 10-12 and any lubricant, including POE lubricants and Lubricants 1 - 2; and (iv) and any combination of each of Refrigerants 5-7 and 10-12 and each of Stabilizers 1 - 19 and any lubricant, including POE lubricant and Lubricants 1 - 2.

For heat transfer systems of the present invention that include a compressor and lubricant for the compressor in the system, the system can comprises a loading of refrigerant and lubricant such that the lubricant loading in the system is from about 5% to 60% by weight, or from about 10% to about 60% by weight, or from about 20% to about 50% by weight, or from about 20% to about 40% by weight, or from about 20% to about 30% by weight, or from about 30% to about 50% by weight, or from about 30% to about 40% by weight. As used herein, the term "lubricant loading" refers to the total weight of lubricant contained in the system as a percentage of total of lubricant and refrigerant contained in the system. Such systems may also include a lubricant loading of from about 5% to about 10% by weight, or about 8 % by weight of the heat transfer composition..

The present invention provides heat transfer systems that include a refrigerant of the present invention, including each of Refrigerants 5-7 and 10-12, lubricant of the invention and alkylated naphthalene present in an amount of from 0.1% to about 20%, or from about 5% to about a 15%, or from about 8% to about 12%, where amounts are in percent by weight based on the amount of alkylated naphthalene plus lubricant in the system.

The present invention provides heat transfer systems that include a refrigerant of the present invention, including each of Refrigerants 5-7 and 10-12, Lubricant 1 and alkylated naphthalene in an amount of from 0.1% to about 20%, or from about 5% to about a 15%, or from about 8% to about 12%, where amounts are in percent by weight based on the amount of alkylated naphthalene plus lubricant in the system.

The present invention provides heat transfer systems that include a refrigerant of the present invention, including each of Refrigerants 5-7 and 10-12, Lubricant 2 and alkylated naphthalene in an amount of from 0.1% to about 20%, or from about 5% to about a 15%, or from about 8% to about 12%, where amounts are in percent by weight based on the amount of alkylated naphthalene plus lubricant in the system.

### Exemplary Heat Transfer Systems

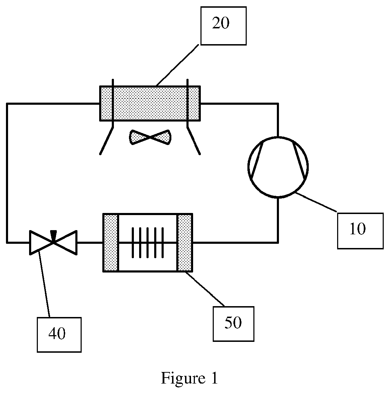

As described in detail below, the preferred systems of the present invention comprise a compressor, a condenser, an expansion device and an evaporator, all connected in fluid communication using piping, valving and control systems such that the refrigerant and associated components of the heat transfer composition can flow through the system in known fashion to complete the refrigeration cycle. An exemplary schematic of such a basic system is illustrated in Figure 1. In particular, the system schematically illustrated in Figure 1 shows a compressor 10, which provides compressed refrigerant vapor to condenser 20. The compressed refrigerant vapor is condensed to produce a liquid refrigerant which is then directed to an expansion device 40 that produces refrigerant at reduced temperature pressure, which in turn is then provided to evaporator 50. In evaporator 50 the liquid refrigerant absorbs heat from the body or fluid being cooled, thus producing a refrigerant vapor which is then provided to the suction line of the compressor.

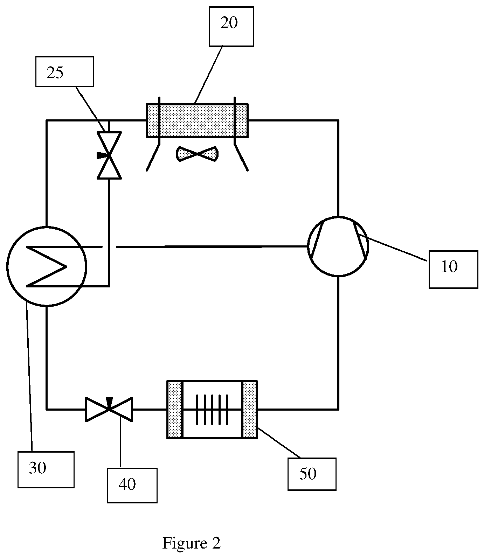

The refrigeration system illustrated in Figure 2 is the same as described above in connection with Figure 1 except that it includes a vapor injection system including heat exchanger 30 and bypass expansion valve 25. The bypass expansion device 25 diverts a portion of the refrigerant flow at the condenser outlet through the device and thereby provides liquid refrigerant to heat exchanger 30 at a reduced pressure, and hence at a lower temperature, to heat exchanger 30. This relatively cool liquid refrigerant is then exchanges heat with the remaining, relatively high temperature liquid from the condenser. This operation produces a subcooled liquid to the main expansion device 40 and evaporator 50 and returns a relatively cool refrigerant vapor to the compressor 10. In this way the injection of the cooled refrigerant vapor into the suction side of the compressor serves to maintain compressor discharge temperatures in acceptable limits, which can be especially advantageous in low temperature systems that utilize high compression ratios.

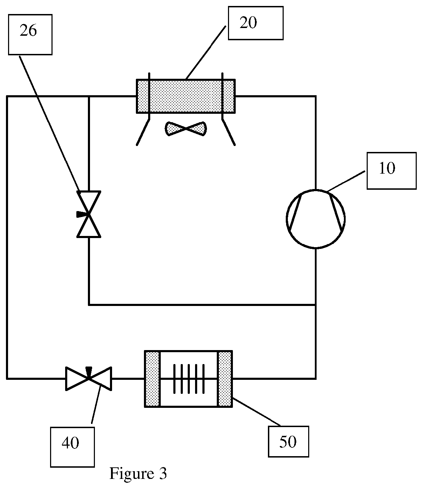

The refrigeration system illustrated in Figure 3 is the same as described above in connection with Figure 1 except that it includes a liquid injection system including bypass valve 26. The bypass valve 26 diverts a portion of the liquid refrigerant exiting the condenser to the compressor, preferably to a liquid injection port in the compressor 10. In this way the injection of liquid refrigerant into the suction side of the compressor serves to maintain compressor discharge temperatures in acceptable limits, which can be especially advantageous in low temperature systems that utilize high compression ratios.

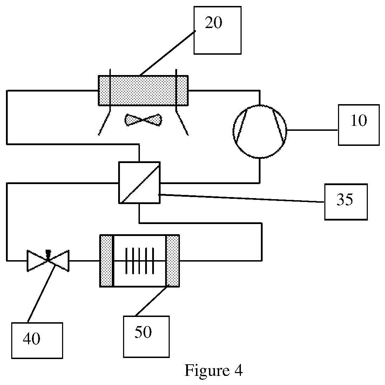

The refrigeration system illustrated in Figure 4 is the same as described above in connection with Figure 1 except that it includes a liquid line/suction line heat exchanger 35. The valve 25 diverts a portion of the of the refrigerant flow at the condenser outlet to the liquid line/suction line heat exchanger, where heat is transferred from the liquid refrigerant to the refrigerant vapor leaving evaporator 50.

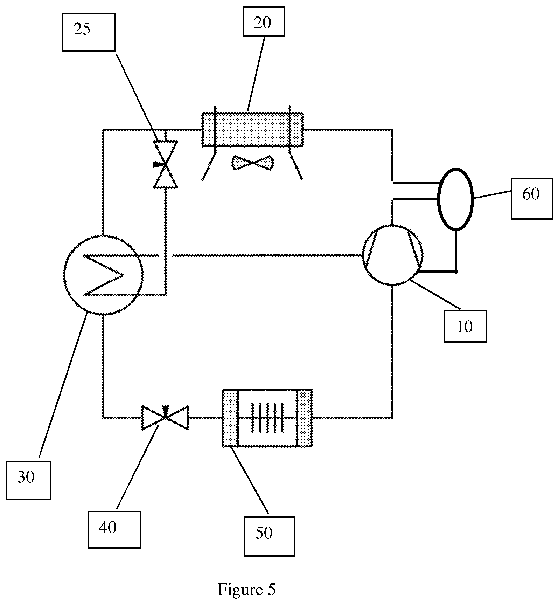

The refrigeration system illustrated in Figure 5 is the same as described above in connection with Figure 1 except that it includes an oil separator 60 connected to the outlet of the compressor 10. As is known to those skilled in the art, some amount of compressor lubricant will typically be carried over into the compressor discharge refrigerant vapor, and the oil separator is included to provide means to disengage the lubricant liquid from the refrigerant vapor, and a result refrigerant vapor which has a reduced lubricant oil content, proceeds to the condenser inlet and liquid lubricant is then returned to the lubricant reservoir for use in lubricating the compressor, such as a lubricant receiver. In preferred embodiments, the oil separator includes the sequestration materials described herein, preferably in the form of a filter or solid core.

It will be appreciated by those skilled in the art that the different equipment/configuration options shown separately in each of Figures 2 - 5 can be combined and used together as deemed advantageous for any particular application.

### Systems with Sequestration Materials

The heat transfer system according to the present invention can comprise a compressor, an evaporator, a condenser and an expansion device, in communication with each other, a refrigerant of the present invention, including any one of Refrigerants 5-7 and 10-12, a lubricant, including POE Lubricant and Lubricants 1 - 2, and a sequestration material in the system, wherein said sequestration material preferably comprises:
i. copper or a copper alloy, or
ii. activated alumina, or
iii. a zeolite molecular sieve comprising copper, silver, lead or a combination thereof, or
iv. an anion exchange resin, or
v. a moisture-removing material, preferably a moisture-removing molecular sieve, or
vi. a combination of two or more of the above.

Preferred materials from each of the categories (i) - (v) above is described below.

### a. Copper / copper alloy sequestration material

The sequestration material may be copper, or a copper alloy, preferably copper. The copper alloy may comprise, in addition to copper, one or more further metals, such as tin, aluminum, silicon, nickel or a combination thereof. Alternatively, or in addition, the copper alloy may comprise one or more non-metal elements, e.g. carbon, nitrogen, silicon, oxygen or a combination thereof.

It will be appreciated that the copper alloy may comprise varying amounts of copper. For example, the copper alloy may comprise at least about 5 wt%, at least about 15 wt%, at least about 30 wt%, at least about 50 wt%, at least about 70 wt% or at least about 90 wt% of copper, based on the total weight of the copper alloy. It will also be appreciated that the copper alloy may comprise from about 5 wt% to about 95 wt%, from about 10 wt% to about 90 wt%, from about 15 wt% to about 85 wt%, from about 20 wt% to about 80 wt%, from about 30 wt% to about 70 wt%, or from about 40 wt% to about 60 wt% of copper, based on the total weight of the copper alloy.

Alternatively, copper may be used as a sequestration material. The copper metal may contain impurity levels of other elements or compounds. For example, the copper metal may contain at least about 99 wt%, more preferably at least about 99.5 wt%, more preferably at least about 99.9 wt% of elemental copper.

The copper or copper alloy may be in any form which allows the refrigerant to contact the surface of the copper or copper alloy. Preferably, the form of the copper or copper alloy is selected to maximize the surface area of the copper or copper alloy (i.e. to maximize the area which is in contact with the refrigerant).

For example, the metal may be in the form of a mesh, wool, spheres, cones, cylinders etc. The term "sphere" refers to a three dimensional shape where the difference between the largest diameter and the smallest diameter is about 10% or less of the largest diameter.

The copper or copper alloy may have a BET surface area of at least about 10 m²/g, at least about 20 m²/g, at least about 30m²/g, at least about 40m²/g or at least about 50 m²/g. The BET-surface area may be measured in accordance with ASTM D6556-10.

When the sequestration material comprises copper or a copper alloy, the BET surface area of the copper or copper alloy may be from about 0.01 to about 1.5 m² per kg of refrigerant, preferably from about 0.02 to about 0.5 m² per kg of refrigerant.

For example, the copper or copper alloy may have a surface area of about 0.08 m² per kg of refrigerant.

### b. Zeolite molecular sieve sequestration material

The sequestration material may comprise a zeolite molecular sieve. The zeolite molecular sieve can comprise copper, silver, lead or a combination thereof, preferably at least silver.

In preferred embodiments, the zeolite molecular sieve contains an amount of metal, and preferably in certain embodiments silver, of from about 1% to about 30% by weight, or preferably from about 5% to about 20% by weight, based on the total weight of the zeolite.

The metal (i.e. copper, silver and/or lead) may be present in a single oxidation state, or in a variety of oxidation states (e.g. a copper zeolite may comprise both Cu(I) and Cu(II)).

The zeolite molecular sieve may comprise metals other than silver, lead, and/or copper.

The zeolite may have openings which have a size across their largest dimension of from about 5 to 40 Å (Angstroms). For example, the zeolite may have openings which have a size across their largest dimension of about 35Å (Angstroms) or less. Preferably, the zeolite has openings which have a size across their largest dimension of from about 15 to about 35Å (Angstroms). Zeolite such as IONSIV D7310-C has activated sites that applicants have found to effectively remove specific decomposition products in accordance with the present invention.

When the sequestration material comprises a zeolite molecular sieve comprising copper, silver, lead or a combination thereof, the molecular sieve (e.g. zeolite) may be present in an amount of from about 1 wt% to about 30 wt%, such as from about 2 wt% to about 25 wt% relative to the total amount of molecular sieve (e.g., zeolite), refrigerant and lubricant (if present) in the heat transfer system.

In preferred embodiments, the sequestration material comprises a zeolite molecular sieve comprising silver, and in such embodiments the molecular sieve may be present in an amount of at least 5% parts by weight (pbw), preferably from about 5 pbw to about 30 pbw, or from about 5 pbw to about 20 pbw, per 100 parts by weight of lubricant (pphl) based on the total amount of molecular sieve (e.g., zeolite) and lubricant in the heat transfer system being treated. The preferred embodiments as described in this paragraph have been found to have exceptional ability to remove fluoride from heat transfer compositions as described herein. Furthermore in such preferred embodiments as described in this paragraph, the amount of the silver present in the molecular sieve is from about 1% to about 30% by weight, or preferably from about 5% to about 20% by weight, based on the total weight of the zeolite.

In preferred embodiments, the sequestration material comprises a zeolite molecular sieve comprising silver, and in such embodiments the molecular sieve (e.g., zeolite) may be present in an amount of at least about 10 pphl, preferably from about 10 pphlto about 30 pphl, or from about 10 pphl to about 20 pphl by weight relative to the total amount of molecular sieve (e.g., zeolite), and lubricant in the heat transfer system being treated. The preferred embodiments as described in this paragraph have been found to have exceptional ability to remove iodide from heat transfer compositions as described herein. Furthermore, in such preferred embodiments as described in this paragraph, the amount of the silver present in the molecular sieve is from about 1% to about 30% by weight, or preferably from about 5% to about 20% by weight, based on the total weight of the zeolite.

In preferred embodiments, the sequestration material comprises a zeolite molecular sieve comprises silver, and in such embodiments the molecular sieve may be present in an amount of at least pphl, preferably from about 15 pphl to about 30 pphl, or from about 15 pphl to about 20 pphl by weight relative to the total amount of molecular sieve, and lubricant in the heat transfer system being treated. The preferred embodiments as described in this paragraph have been found to have exceptional ability to reduce TAN levels in the heat transfer compositions as described herein. Furthermore, in such preferred embodiments as described in this paragraph, the amount of the silver present in the molecular sieve is from about 1% to about 30% by weight, or preferably from about 5% to about 20% by weight, based on the total weight of the zeolite.

Preferably, the zeolite molecular sieve is present in an amount of at least about 15 pphl, or at least about 18 pphl relative to the total amount of molecular sieve and lubricant in the system. Therefore, the molecular sieve may be present in an amount of from about 15 pphl to about 30 pphl, or from about 18 pphl to about 25 pphl relative to the total amount of molecular sieve and lubricant present in the system.

It will be appreciated that the zeolite may be present in an amount of about 5 pphl or about 21 pphl relative to the total amount of molecular sieve, and lubricant in the system.

The amount of zeolite molecular sieve described herein refers to the dry weight of the molecular sieve. As used herein, the term "dry weight" of the sequestration materials means that the material has 50 ppm or less of moisture.

### c. Anion exchange resins

The sequestration material may comprise an anion exchange resin.

Preferably, the anion exchange resin is a strongly basic anion exchange resin. The strongly basic anion exchange resin may be a type 1 resin or a type 2 resin. Preferably, the anion exchange resin is a type 1 strongly basic anion exchange resin.

The anion exchange resin generally comprises a positively charged matrix and exchangeable anions. The exchangeable anions may be chloride anions (Cl⁻) and/or hydroxide anions (OH⁻).

The anion exchange resin may be provided in any form. For example, the anion exchange resin may be provided as beads. The beads may have a size across their largest dimension of from about 0.3mm to about 1.2mm, when dry.

When the sequestration material comprises an anion exchange resin, the anion exchange resin may be present in an amount of from about 1 pphl to about 60 pphl, or from about 5 pphl to about 60 pphl, or from about 20 pphl to about 50 pphl, or from about 20 pphl to about 30 pphl, or from about 1 pphl to about 25 pphl, such as from about 2 pphl to about 20 pphl based on the total amount of anion exchange resin and lubricant in the system.

Preferably, the anionic exchange resin is present in an amount of at least about 10 pphl, or at least about 15 pphl relative to the total amount of anionic exchange resin and lubricant in the system. Therefore, the anion exchange resin may be present in an amount of from about 10 pphl to about 25 pphl, or from about 15 pphl to about 20 pphl relative to the total amount of anion exchange resin and lubricant in the system.

It will be appreciated that the anion exchange resin may be present in an amount of about 4 pphl or about 16 pphl based on the total amount of anion exchange resin and lubricant present in the system.

Applicants have found an unexpectedly advantageous ability of industrial grade weakly base anion exchange adsorbent resins, including in particular the material sold under the trade designation Amberlyst A21 (Free Base) to act as a sequestration material. As used herein, the term weak base anion resin refers to resins in the free base form, which are preferably e functionalized with a tertiary amine (uncharged). Tertiary amine contains a free lone pair of electrons on the nitrogen, which results in it being readily protonated in presence of an acid. In preferred embodiments, the ion exchange resin as used according to the present invention is protonated by the acid, then attracts and binds the anionic counter ion for full acid removal, without contributing any additional species back into solution.

Amberlyst A21 is a preferred material in that applicants have found it to be advantageous because it provides a macroporous structure makes it physically very stable and resistant to breakage, and applicants have found that it can withstand high flow rates of the refrigeration system over relatively long periods of time, including preferably over the lifetime of the system.

The amount of anion exchange resin described herein refers to the dry weight of the anion exchange resin. As used herein, the term "dry weight" of the sequestration materials means that the material has 50 ppm or less of moisture.

As used herein, pphl of a particular sequestration material means the parts per hundred of the particular sequestration material by weight based on the total weight of that particular sequestration material and lubricant in the system.

### d. Moisture removing material

A preferred sequestration material is a moisture removing material. In preferred embodiments the moisture removing material comprises, consists essentially of or consists of a moisture-removing molecular sieve. Preferred moisture-removing molecular sieves include those commonly known as sodium aluminosilicate molecular sieves, and such materials are preferably crystalline metal aluminosilicates having a three dimensional interconnecting network of silica and alumina tetrahedra. Applicants have found that such materials are effective in the systems of the present invention to remove moisture and are most preferably classified according to pore size as types 3A, 4A, 5A and 13X.

The amount that the moisture removing material, and particularly the moisture-removing molecular sieve, and even more preferably sodium aluminosilicate molecular sieve, is preferably from about 15 pphl to about 60 pphl by weight, and even more preferably from about 30 pphl to 45 pphl by weight.

### e. Activated alumina

Examples of activated alumina that applicants have found to be effective according to the present invention and commercially available include those sodium activated aluminas sold under the trade designation F200 by BASF and by Honeywell/UOP under the trade designation CLR-204. Applicants have found that activated alumina in general and the above-mentioned sodium activated aluminas in particular are especially effective for sequestering the types of acidic detrimental materials that are produced in connection with the refrigerant compositions and heat transfer methods and systems of the present invention.

When the sequestration material comprises activated alumina, the activated alumina may be present in an amount of from about 1 pphl to about 60 pphl, or from about 5 pphl to about 60 pphl by weight.

### f. Combinations of Sequestration Materials

When a combination of sequestration materials is present, the materials may be provided in any ratio relative to each other.

For example, when the sequestration material comprises an anion exchange resin and a molecular sieve (e.g. a zeolite), the weight ratio (when dry) of anion exchange resin to molecular sieve (e.g. zeolite) is preferably in the range of from about 10:90 to about 90:10, from about 20:80 to about 80:20, from about 25:75 to about 75:25, from about 30:70 to about 70:30, or from about 60:40 to about 40:60. Exemplary weight ratios of anion exchange resin to metal zeolite include about 25:75, about 50:50 and about 75:25.

For the purpose of convenience, a heat transfer system that includes at least one of sequestration materials (i) - (v) is referred to herein for convenience as **Sequestration Material 1.**

For the purpose of convenience, a heat transfer system that includes sequestration materials from at least two of the (i) - (v) categories, such a material is referred to herein for convenience as **Sequestration Material 2.**

For the purpose of convenience, a heat transfer system that includes sequestration materials from at least two of the (ii) - (v) categories, such a material is referred to herein for convenience as **Sequestration Material 3.**

For the purpose of convenience, a heat transfer system that includes sequestration materials from at least three of the (ii) - (v) categories, such a material is referred to herein for convenience as **Sequestration Material 4.**

For the purpose of convenience, when a heat transfer system includes sequestration material from each of categories (ii) - (v), such a material is referred to herein for convenience as **Sequestration Material 5.**

For the purpose of convenience, when a heat transfer system includes a sequestration material that includes a material from each of categories (ii) - (v), and wherein the material from category (iii) comprises silver, such a material is referred to herein for convenience as **Sequestration Material 6.**

The heat transfer systems according to the present invention can comprise a compressor, an evaporator, a condenser and an expansion device, in fluid communication with each other, a refrigerant of the invention, including each of Refrigerants 5-7 and 10-12, a lubricant, and a Sequestration Material 1.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, and a Sequestration Material 2.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, and a Sequestration Material 3.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, and a Sequestration Material 4.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, and a Sequestration Material 5.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, and a Sequestration Material 6.

The heat transfer systems according to the present invention can comprise a compressor, an evaporator, a condenser and an expansion device, in fluid communication with each other, a refrigerant of the present invention, including each of Refrigerants 5-7 and 10-12, a lubricant, including each of POE lubricants, Lubricant 1 and Lubricant 2, a sequestration material, including each of Sequestration Materials 1 - 6, and a stabilizer, including each of Stabilizers 1 - 13.

The heat transfer systems according to the present invention can comprise a compressor, an evaporator, a condenser and an expansion device, in fluid communication with each other, Refrigerant 5, POE lubricant, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 5, Lubricant 1, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 5, Lubricant 2, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 10, POE lubricant, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 10, Lubricant 1, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 10, Lubricant 2, Stabilizer 1 and a sequestration material, including each of Sequestration Materials 1 - 6.

The heat transfer systems according to the present invention can comprise a compressor, an evaporator, a condenser and an expansion device, in fluid communication with each other, Refrigerant 5, POE lubricant, Stabilizer 3 and a sequestration material, including each of Sequestration Materials 1 - 6.

The heat transfer systems according to the present invention can comprise a compressor, an evaporator, a condenser and an expansion device, in fluid communication with each other, Refrigerant 5, Lubricant 1, Stabilizer 3 and a sequestration material, including each of Sequestration Materials 1 - 6.

The heat transfer systems according to the present invention can comprise a compressor, an evaporator, a condenser and an expansion device, in fluid communication with each other, Refrigerant 5, Lubricant 2, Stabilizer 3 and a sequestration material, including each of Sequestration Materials 1 - 6.

The heat transfer systems according to the present invention can comprise a compressor, an evaporator, a condenser and an expansion device, in fluid communication with each other, Refrigerant 10, POE lubricant, Stabilizer 3 and a sequestration material, including each of Sequestration Materials 1 - 6.

The heat transfer systems according to the present invention can comprise a compressor, an evaporator, a condenser and an expansion device, in fluid communication with each other, Refrigerant 10, Lubricant 1, Stabilizer 3 and a sequestration material, including each of Sequestration Materials 1 - 6.

The heat transfer systems according to the present invention can comprise a compressor, an evaporator, a condenser and an expansion device, in fluid communication with each other, Refrigerant 10, Lubricant 2, Stabilizer 3 and a sequestration material, including each of Sequestration Materials 1 - 6.

The heat transfer systems of the present invention include systems which include an oil separator downstream of the compressor, and such systems preferably include one or more sequestration materials of the present invention, including each of Sequestration Materials 1 - 6, wherein said sequestration materials are located inside the oil separator, or in some cases outside but downstream of the oil separator, such that the liquid lubricant is in contact with the sequestration material(s).

The present invention also includes one or more of the sequestration materials, including Sequestration Materials 1 - 6, being located in the refrigerant liquid that exits the condenser.

The present invention also includes methods for transferring heat of the type comprising evaporating refrigerant liquid to produce a refrigerant vapor, compressing in a compressor at least a portion of the refrigerant vapor and condensing refrigerant vapor, said method comprising:
(a) providing a refrigerant according to the present invention, including each of Refrigerants 5-7 and 10-12;
(b) optionally but preferably providing lubricant for said compressor; and
(c) exposing at least a portion of said refrigerant and/or at least a portion of said lubricant to Sequestration Material 1.

The present invention also includes methods for transferring heat of the type comprising evaporating refrigerant liquid to produce a refrigerant vapor, compressing in a compressor at least a portion of the refrigerant vapor and condensing refrigerant vapor, said method comprising:
(a) providing a refrigerant according to the present invention, including each of Refrigerants 5-7 and 10-12;
(b) optionally but preferably providing lubricant for said compressor; and
(c) exposing at least a portion of said refrigerant and/or at least a portion of said lubricant to Sequestration Material 3.

The present invention also includes methods for transferring heat of the type comprising evaporating refrigerant liquid to produce a refrigerant vapor, compressing in a compressor at least a portion of the refrigerant vapor and condensing refrigerant vapor, said method comprising:
(a) providing a refrigerant according to the present invention, including each of Refrigerants 5-7 and 10-12;
(b) optionally but preferably providing lubricant for said compressor; and
(c) exposing at least a portion of said refrigerant and/or at least a portion of said lubricant to Sequestration Material 5.

The present invention also includes heat transfer methods according to any of the preceding four paragraphs wherein said exposing temperature is preferably above about 10°C.

In other aspects of the present invention, at least two materials are included together in a filter element. As the term is used herein, "filter element" refers to any device, system, article or container in which each of the sequestration materials are located in close physical proximity, and preferably at essentially the same location within the system.

In other aspects of the present invention, Sequestration Material 2 is used in the present heat transfer systems and the present heat transfer methods is configured such that each of the at least two materials are included together in a solid core. As the term is used herein, "solid core" refers to relatively porous solid which contains and/or has embedded therein two or more of sequestration materials such that such materials are accessible to fluids passing through said any solid core. In preferred embodiments the one or more sequestration materials are substantially homogeneously distributed throughout the solid core.

In preferred embodiments, the solid core of the present invention is included in or comprises a filter element.

In preferred embodiments, Sequestration Material 2 is configured such that each of the at least two materials are included in a solid core.

In preferred embodiments, Sequestration Material 3 is configured such that each of the at least two materials are included together in a filter element.

In preferred embodiments, Sequestration Material 3 is configured such that all of materials are included in a solid core.

In preferred embodiments, Sequestration Material 5 is configured such that each of the at least two materials are included together in a filter element.

In preferred embodiments, Sequestration Material 5 is configured such that all of materials are included in a solid core.

In preferred embodiments, Sequestration Material 6 is configured such that each of the at least two materials are included together in a filter element.

In preferred embodiments, Sequestration Material 6 is configured such that all of materials are included in a solid core.

With respect to sequestration materials, the systems of the present invention preferably include a sequestration material, including each of Sequestration Materials 1 - 6, in contact with at least a portion of a refrigerant according to the present invention, including each of Refrigerants 5-7 and 10-12, and/or with at least a portion of the lubricant, including each of POE lubricant and Lubricants 1 - 2, wherein the temperature of said sequestration material and/or the temperature of said refrigerant and/or the temperature of the lubricant when in said contact are at a temperature that is preferably at least about 10°C. Any and all of the refrigerants and any and all of the sequestration materials as described herein can be used in the systems of the present invention.

As used in this application, the term "in contact with at least a portion" is intended in its broad sense to include each of said sequestration materials and any combination of sequestration materials as described herein being in contact with the same or separate portions of the refrigerant and/or the lubricant in the system and is intended to include but not necessarily limited to embodiments in which each type or specific sequestration material is: (i) located physically together with each other type or specific material, if present; (ii) is located physically separate from each other type or specific material, if present, and (iii) combinations in which two or more materials are physically together and at least one sequestration material is physically separate from at least one other sequestration material.

### Residential Air Conditioning Systems

The heat transfer systems according to the present invention include residential air conditioning systems that comprise a compressor, an evaporator, a condenser and an expansion device, in fluid communication with each other, a refrigerant of the invention, including each of Refrigerants 5-7 and 10-12 and a lubricant, including each of POE lubricant and Lubricant 1 - 2.

The heat transfer systems according to the present invention include residential air conditioning systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2 and a sequestration material, including each of Sequestration Materials 1 - 6.

The heat transfer systems according to the present invention include residential air conditioning systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17.

The heat transfer systems according to the present invention include residential air conditioning systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17 and a sequestration material, including each of Sequestration Materials 1 - 6.

The heat transfer systems according to the present invention include residential air conditioning systems that comprise a compressor, an evaporator, a condenser and an expansion device, in fluid communication with each other, Refrigerant 5, POE lubricant, and stabilizer, including each of Stabilizers 1- 17.

The heat transfer systems according to the present invention include residential air conditioning systems that comprise a compressor, an evaporator, a condenser and an expansion device, in fluid communication with each other, Refrigerant 5, POE lubricant, Stabilizer 1, and sequestration material selected from Sequestration Materials 1- 6.

The heat transfer systems according to the present invention include residential air conditioning systems that comprise a compressor, an evaporator, a condenser and an expansion device, Refrigerant 5, a POE lubricant and Stabilizer 1.

The heat transfer systems according to the present invention include residential air conditioning refrigeration systems that comprise a compressor, an evaporator having an evaporator operating temperature of about -20°C to about 20°C, a condenser and an expansion device, Refrigerant 5, a POE lubricant and Stabilizer 1.

The heat transfer systems according to the present invention include residential air conditioning refrigeration systems operating in the cooling mode that comprise a compressor, an evaporator having an evaporator operating temperature of about 0°C to about 20°C, a condenser and an expansion device, Refrigerant 5, a POE lubricant and Stabilizer 1.

The heat transfer systems according to the present invention include residential air conditioning refrigeration systems operating in the cooling mode that comprise a compressor, an evaporator having an evaporator operating temperature of about 0°C to about 10°C, a condenser and an expansion device, Refrigerant 5, a POE lubricant and Stabilizer 1.

The heat transfer systems according to the present invention include residential air conditioning refrigeration systems operating in the cooling mode that comprise a compressor, an evaporator having an evaporator operating temperature of about 7°C, a condenser and an expansion device, Refrigerant 5, a POE lubricant and Stabilizer 1.

The heat transfer systems according to the present invention include residential air conditioning refrigeration systems operating in the heating mode that comprise a compressor, an evaporator having an evaporator operating temperature of about -20°C to about 3°C, a condenser and an expansion device, Refrigerant 5, a POE lubricant and Stabilizer 1.

The heat transfer systems according to the present invention include residential air conditioning refrigeration systems operating in the heating mode that comprise a compressor, an evaporator having an evaporator operating temperature of about -20°C to about 3°C, a condenser and an expansion device, Refrigerant 5, a POE lubricant and Stabilizer 1.

The heat transfer systems according to the present invention include residential air conditioning systems that comprise a compressor, an evaporator, a condenser and an expansion device, in fluid communication with each other, Refrigerant 10, POE lubricant, and stabilizer, including each of Stabilizers 1- 17.

The heat transfer systems according to the present invention include residential air conditioning systems that comprise a compressor, an evaporator, a condenser and an expansion device, in fluid communication with each other, Refrigerant 10, POE lubricant, Stabilizer 1, and sequestration material selected from Sequestration Materials 1- 6.

The heat transfer systems according to the present invention include residential air conditioning systems that comprise a compressor, an evaporator, a condenser and an expansion device, Refrigerant 10, a POE lubricant and Stabilizer 1.

The heat transfer systems according to the present invention include residential air conditioning refrigeration systems that comprise a compressor, an evaporator having an evaporator operating temperature of about -20°C to about 20°C, a condenser and an expansion device, Refrigerant 10, a POE lubricant and Stabilizer 1.

The heat transfer systems according to the present invention include residential air conditioning refrigeration systems operating in the cooling mode that comprise a compressor, an evaporator having an evaporator operating temperature of about 0°C to about 20°C, a condenser and an expansion device, Refrigerant 10, a POE lubricant and Stabilizer 1.

The heat transfer systems according to the present invention include residential air conditioning refrigeration systems operating in the cooling mode that comprise a compressor, an evaporator having an evaporator operating temperature of about 0°C to about 10°C, a condenser and an expansion device, Refrigerant 10, a POE lubricant and Stabilizer 1.

The heat transfer systems according to the present invention include residential air conditioning refrigeration systems operating in the cooling mode that comprise a compressor, an evaporator having an evaporator operating temperature of about 7°C, a condenser and an expansion device, Refrigerant 10, a POE lubricant and Stabilizer 1.

The heat transfer systems according to the present invention include residential air conditioning refrigeration systems operating in the heating mode that comprise a compressor, an evaporator having an evaporator operating temperature of about -20°C to about 3°C, a condenser and an expansion device, Refrigerant 10, a POE lubricant and Stabilizer 1.

The heat transfer systems according to the present invention include residential air conditioning refrigeration systems operating in the heating mode that comprise a compressor, an evaporator having an evaporator operating temperature of about -20°C to about 3°C, a condenser and an expansion device, Refrigerant 10, a POE lubricant and Stabilizer 1.

For each of the residential air conditioning systems described herein operating in the cooling mode, the condenser preferably operates with a condensing temperature in the range of from about 40°C to about 70°C.

For each of the residential air conditioning systems described herein operating in the heating mode, the condenser preferably operates with a condensing temperature in the range of from about 35°C to about 50°C.

For each of the residential air conditioning systems described herein operating in the cooling mode, the system preferably provides cool air (said air having a temperature of for example, about 10°C to about 17°C, particularly about 12°C) to buildings for example, in the summer.

For each of the residential air conditioning systems described herein operating in the heating mode, that is, as a heat pump, the system preferably provides warm air, with the supplied warm air having a temperature of for example, about 18°C to about 24°C, particularly about 21°C, to buildings in the winter. It is usually the same system as the residential air-conditioning system that operates in the cooling mode; however, while operating in the heat pump mode the refrigerant flow is reversed and the indoor coil becomes a condenser and the outdoor coil becomes an evaporator..

### Air Cooled Chiller Systems

The heat transfer systems according to the present invention include air cooled chiller systems that comprise a compressor, an evaporator, a condenser and an expansion device, in fluid communication with each other, a refrigerant of the invention, including each of Refrigerants 5-7 and 10-12 and a lubricant, including each of POE lubricant and Lubricant 1 - 2.

The heat transfer systems according to the present invention include air cooled chiller systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2 and a sequestration material, including each of Sequestration Materials 1 - 6.

The heat transfer systems according to the present invention include air cooled chiller systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17.

The heat transfer systems according to the present invention include air cooled chiller systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17 and a sequestration material, including each

The heat transfer systems according to the present invention include air cooled chiller systems that comprise a compressor, an evaporator, a condenser and an expansion device, in fluid communication with each other, Refrigerant 5, POE lubricant, and stabilizer, including each of Stabilizers 1- 17.

The heat transfer systems according to the present invention include air cooled chiller systems that comprise a compressor, an evaporator, a condenser and an expansion device, in fluid communication with each other, Refrigerant 5, POE lubricant, Stabilizer 1, and sequestration material selected from Sequestration Materials 1- 6.

The heat transfer systems according to the present invention include air cooled chiller systems that comprise a compressor, an evaporator, a condenser and an expansion device, Refrigerant 5, a POE lubricant and Stabilizer 1.

The heat transfer systems according to the present invention include air cooled chiller systems that comprise a compressor, an evaporator having an evaporator operating temperature of about 0°C to about 10°C, a condenser and an expansion device, Refrigerant 5, a POE lubricant and Stabilizer 1.

The heat transfer systems according to the present invention include air cooled chiller systems that comprise a compressor, an evaporator having an evaporator operating temperature of about 4.5°C, a condenser and an expansion device, Refrigerant 5, a POE lubricant and Stabilizer 1.

The heat transfer systems according to the present invention include air cooled chiller systems that comprise a compressor, an evaporator having an evaporator operating temperature of about 0°C to about 10°C, a condenser and an expansion device, Refrigerant 5, a POE lubricant, Stabilizer 1 and sequestration material selected from Sequestration Materials 1- 6.

The heat transfer systems according to the present invention include air cooled chiller systems that comprise a compressor, an evaporator having an evaporator operating temperature of about 4.5°C, a condenser and an expansion device, Refrigerant 5, a POE lubricant, Stabilizer 1 and sequestration material selected from Sequestration Materials 1 - 6.

The heat transfer systems according to the present invention include air cooled chiller systems that comprise a compressor, an evaporator, a condenser and an expansion device, in fluid communication with each other, Refrigerant 10, POE lubricant, and stabilizer, including each of Stabilizers 1- 17.

The heat transfer systems according to the present invention include air cooled chiller systems that comprise a compressor, an evaporator, a condenser and an expansion device, in fluid communication with each other, Refrigerant 10, POE lubricant, Stabilizer 1, and sequestration material selected from Sequestration Materials 1- 6.

The heat transfer systems according to the present invention include air cooled chiller systems that comprise a compressor, an evaporator, a condenser and an expansion device, Refrigerant 10, a POE lubricant and Stabilizer 1.

The heat transfer systems according to the present invention include air cooled chiller systems that comprise a compressor, an evaporator having an evaporator operating temperature of about 0°C to about 10°C, a condenser and an expansion device, Refrigerant 10, a POE lubricant and Stabilizer 1.

The heat transfer systems according to the present invention include air cooled chiller systems that comprise a compressor, an evaporator having an evaporator operating temperature of about 4.5°C, a condenser and an expansion device, Refrigerant 10, a POE lubricant and Stabilizer 1.

The heat transfer systems according to the present invention include air cooled chiller systems that comprise a compressor, an evaporator having an evaporator operating temperature of about 0°C to about 10°C, a condenser and an expansion device, Refrigerant 10, a POE lubricant, Stabilizer 1 and sequestration material selected from Sequestration Materials 1- 6.

The heat transfer systems according to the present invention include air cooled chiller systems that comprise a compressor, an evaporator having an evaporator operating temperature of about 4.5°C, a condenser and an expansion device, Refrigerant 10, a POE lubricant, Stabilizer 1 and sequestration material selected from Sequestration Materials 1- 6.

For each of the of the chiller systems described herein, including operating in a commercial air conditioning system, the chiller preferably provides chilled water, preferably at a temperature of for example, about 5°C to about 10°C, particularly about 7°C) to large buildings such as offices and hospitals, etc. Depending on the application, the chiller system may be running all year long. The chiller system may be air-cooled or water-cooled. In the air-cooled systems, the condenser exchanges heat with (i.e., rejects heat) to ambient air. In the water-cooled systems, the condenser exchanges heat with (i.e., rejects heat) with water, for example, from cooling tower or lake, sea and other natural resource.

For each of the chiller systems described herein, the condenser preferably operates with a condensing temperature in the range of from about 40°C to about 70°C.

### Residential Air to Water Heat Pump Hydronic System

The heat transfer systems according to the present invention include residential air to water heat pumps that comprise a compressor, an evaporator, a condenser and an expansion device, in fluid communication with each other, a refrigerant of the invention, including each of Refrigerants 5-7 and 10-12 and a lubricant, including each of POE lubricant and Lubricant 1 - 2.

The heat transfer systems according to the present invention include residential air to water heat pumps that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2 and a sequestration material, including each of Sequestration Materials 1 - 6.

The heat transfer systems according to the present invention include residential air to water heat pumps that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17.

The heat transfer systems according to the present invention include residential air to water heat pumps that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17 and a sequestration material, including each of Sequestration Materials 1 - 6.

The heat transfer systems according to the present invention include residential air to water heat pumps that comprise a compressor, an evaporator, a condenser and an expansion device, in fluid communication with each other, Refrigerant 5, POE lubricant, and stabilizer, including each of Stabilizers 1- 17.

The heat transfer systems according to the present invention include residential air to water heat pumps that comprise a compressor, an evaporator, a condenser and an expansion device, in fluid communication with each other, Refrigerant 5, POE lubricant, Stabilizer 1, and sequestration material selected from Sequestration Materials 1- 6.

The heat transfer systems according to the present invention include residential air to water heat pumps that comprise a compressor, an evaporator, a condenser and an expansion device, Refrigerant 5, a POE lubricant and Stabilizer 1.

The heat transfer systems according to the present invention include residential air to water heat pumps systems that comprise a compressor, an evaporator having an evaporator operating temperature of about -30°C to about 5°C, a condenser and an expansion device, Refrigerant 5, a POE lubricant and Stabilizer 1.

The heat transfer systems according to the present invention include residential air to water heat pumps systems that comprise a compressor, an evaporator having an evaporator operating temperature of about -20°C to about 3°C, a condenser and an expansion device, Refrigerant 5, a POE lubricant and Stabilizer 1.

The heat transfer systems according to the present invention include residential air to water heat pumps that comprise a compressor, an evaporator having an evaporator operating temperature of about 0.5°C, a condenser and an expansion device, Refrigerant 5, a POE lubricant and Stabilizer 1.

The heat transfer systems according to the present invention include residential air to water heat pumps that comprise a compressor, an evaporator, a condenser and an expansion device, in fluid communication with each other, Refrigerant 10, POE lubricant, and stabilizer, including each of Stabilizers 1- 17.

The heat transfer systems according to the present invention include residential air to water heat pumps that comprise a compressor, an evaporator, a condenser and an expansion device, in fluid communication with each other, Refrigerant 10, POE lubricant, Stabilizer 1, and sequestration material selected from Sequestration Materials 1- 6.

The heat transfer systems according to the present invention include residential air to water heat pumps systems that comprise a compressor, an evaporator having an evaporator operating temperature of about -30°C to about 5°C, a condenser and an expansion device, Refrigerant 10, a POE lubricant and Stabilizer 1.

The heat transfer systems according to the present invention include residential air to water heat pumps systems that comprise a compressor, an evaporator having an evaporator operating temperature of about -20°C to about 3°C, a condenser and an expansion device, Refrigerant 10, a POE lubricant and Stabilizer 1.

The heat transfer systems according to the present invention include residential air to water heat pumps that comprise a compressor, an evaporator having an evaporator operating temperature of about 0.5°C, a condenser and an expansion device, Refrigerant 10, a POE lubricant and Stabilizer 1.

For each of the residential air to water heat pumps described herein, the system preferably provides hot water, with the water preferably having a temperature of for example about 50°C or about 55°C, to buildings for floor heating or similar applications in the winter.

For each of the residential air to water heat pumps described herein, the condenser preferably operates with a condensing temperature in the range of from about 50°C to about 90°C.

### Low Temperature Systems

The heat transfer systems according to the present invention include low temperature heat transfer systems that comprise a compressor, an evaporator, a condenser and an expansion device, in fluid communication with each other, a refrigerant of the invention, including each of Refrigerants 5-7 and 10-12 and a lubricant, including each of POE lubricant and Lubricant 1 - 2.

The heat transfer systems according to the present invention include low temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2 and a sequestration material, including each of Sequestration Materials 1 - 6.

The heat transfer systems according to the present invention include low temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17.

The heat transfer systems according to the present invention include low temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 - 2, and a stabilizer, including each of Stabilizers 1- 17 and a sequestration material, including each of Sequestration Materials 1 - 6.

The heat transfer systems according to the present invention include low temperature transport refrigeration systems that comprise a compressor, an evaporator, a condenser and an expansion device, in fluid communication with each other, Refrigerant 5, POE lubricant, Stabilizer 1, and sequestration material selected from Sequestration Materials 1- 6.

The heat transfer systems according to the present invention include low temperature transport refrigeration systems that comprise a compressor, an evaporator having an evaporator operating temperature of about -35°C to about -25°C, a condenser and an expansion device, in fluid communication with each other, Refrigerant 5, POE lubricant, and stabilizer, including each of Stabilizers 1- 17.

The heat transfer systems according to the present invention include low temperature chiller systems that comprise a compressor, an evaporator, a condenser and an expansion device, Refrigerant 5, a POE lubricant and Stabilizer 1.

The heat transfer systems according to the present invention include low temperature chiller systems that comprise a compressor, an evaporator having an evaporator operating temperature of about -25°C to -12°C, a condenser and an expansion device, Refrigerant 5, a POE lubricant and Stabilizer 1.

The heat transfer systems according to the present invention include low temperature chiller systems that comprise a compressor, an evaporator having an evaporator operating temperature of about -25°C to -12°C, a condenser and an expansion device, Refrigerant 5, a POE lubricant and Stabilizer 1 and sequestration material selected from Sequestration Materials 1- 6.

The heat transfer systems according to the present invention include low temperature supermarket refrigeration systems that comprise a compressor, an evaporator, a condenser and an expansion device, Refrigerant 5, a POE lubricant and Stabilizer 1.

The heat transfer systems according to the present invention include low temperature supermarket refrigeration systems that comprise a compressor, an evaporator having an evaporator operating temperature of about -35°C to -12°C, a condenser and an expansion device, Refrigerant 5, a POE lubricant and Stabilizer 1.

The heat transfer systems according to the present invention include low temperature supermarket refrigeration systems that comprise a compressor, an evaporator having an evaporator operating temperature of about -35°C to -12°C, a condenser and an expansion device, Refrigerant 5, a POE lubricant, Stabilizer 1 and sequestration material selected from Sequestration Materials 1- 6.

The heat transfer systems according to the present invention include low temperature supermarket refrigeration systems that comprise a compressor, an evaporator having an evaporator operating temperature of about -35°C to about -25°C, a condenser and an expansion device, Refrigerant 5, a POE lubricant and Stabilizer 1.

The heat transfer systems according to the present invention include low temperature supermarket refrigeration systems that comprise a compressor, an evaporator having an evaporator operating temperature of about -35°C to about -25°C, a condenser and an expansion device, Refrigerant 5, a POE lubricant, Stabilizer 11 and sequestration material selected from Sequestration Materials 1- 6.

The heat transfer systems according to the present invention include low temperature transport refrigeration systems that comprise a compressor, an evaporator having an evaporator operating temperature of about -35°C to about -25°C, a condenser and an expansion device, in fluid communication with each other, Refrigerant 10, POE lubricant, and stabilizer, including each of Stabilizers 1- 17.

The heat transfer systems according to the present invention include low temperature chiller systems that comprise a compressor, an evaporator, a condenser and an expansion device, Refrigerant 10, a POE lubricant and Stabilizer 1.

The heat transfer systems according to the present invention include low temperature chiller systems that comprise a compressor, an evaporator having an evaporator operating temperature of about -25°C to about -12°C, a condenser and an expansion device, Refrigerant 10, a POE lubricant and Stabilizer 1.

The heat transfer systems according to the present invention include low temperature chiller systems that comprise a compressor, an evaporator having an evaporator operating temperature of about -25°C to about -12°C, a condenser and an expansion device, Refrigerant 10, a POE lubricant and Stabilizer 1 and sequestration material selected from Sequestration Materials 1- 6.

The heat transfer systems according to the present invention include low temperature supermarket refrigeration systems that comprise a compressor, an evaporator, a condenser and an expansion device, Refrigerant 10, a POE lubricant and Stabilizer 1.

The heat transfer systems according to the present invention include low temperature supermarket refrigeration systems that comprise a compressor, an evaporator having an evaporator operating temperature of about -35°C to -12°C, a condenser and an expansion device, Refrigerant 10, a POE lubricant and Stabilizer 1.

The heat transfer systems according to the present invention include low temperature supermarket refrigeration systems that comprise a compressor, an evaporator having an evaporator operating temperature of about -35°C to -12°C, a condenser and an expansion device, Refrigerant 10, a POE lubricant, Stabilizer 1 and sequestration material selected from Sequestration Materials 1- 6.

The heat transfer systems according to the present invention include low temperature supermarket refrigeration systems that comprise a compressor, an evaporator having an evaporator operating temperature of about -35°C to about -25°C, a condenser and an expansion device, Refrigerant 10, a POE lubricant and Stabilizer 1.

The heat transfer systems according to the present invention include low temperature supermarket refrigeration systems that comprise a compressor, an evaporator having an evaporator operating temperature of about -35°C to about -25°C, a condenser and an expansion device, Refrigerant 10, a POE lubricant, Stabilizer 11 and sequestration material selected from Sequestration Materials 1- 6.

The heat transfer systems according to the present invention include low temperature heat transfer systems that comprise a compressor, a vapor injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature heat transfer systems that comprise a compressor, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature transport refrigeration systems that comprise a compressor, a vapor injector, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature transport refrigeration systems that comprise a compressor, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature transport refrigeration systems that comprise a compressor, a vapor injector, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature supermarket refrigeration systems that comprise a compressor, a vapor injector, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature supermarket refrigeration systems that comprise a compressor, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include low temperature supermarket refrigeration systems that comprise a compressor, a vapor injector, a liquid injector, an evaporator, a condenser, and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

For each of the of the low temperature systems described herein, the systems have a degree of superheat at evaporator outlet of from about 0°C to about 10°C, and preferably with a degree of superheat at evaporator outlet of from about 4°C to about 6°C.

For each of the of the low temperature systems described herein, the systems have a degree of superheat in the suction line of from about 15°C to about 50°C, and preferably with a degree of superheat in the suction line of from about 25°C to about 30°C.

For each of the low temperature systems described herein, the condenser preferably operates with a condensing temperature in the range of from about 20°C to about 70°C, or preferably in the range of from about 20°C to about 60°C, or preferably in the range of from about 25°C to about 45°C.

### Medium Temperature Systems

The heat transfer systems according to the present invention include medium temperature heat transfer systems that comprise a compressor, an evaporator, a condenser and an expansion device, in fluid communication with each other, a refrigerant of the invention, including each of Refrigerants 5-7 and 10-12 and a lubricant, including each of POE lubricant and Lubricant 1 -2.

The heat transfer systems according to the present invention include medium temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 -2 and a sequestration material, including each of Sequestration Materials 1 - 6.

The heat transfer systems according to the present invention include medium temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17.

The heat transfer systems according to the present invention include medium temperature heat transfer systems that comprise a compressor, an evaporator, a condenser and an expansion device, in fluid communication with each other, a refrigerant of the invention, including each of Refrigerants 5-7 and 10-12, a lubricant, including each of POE lubricant and Lubricant 1 -2, and a stabilizer, including each of Stabilizers 1- 17 and a sequestration material, including each of Sequestration Materials 1 - 6.

The heat transfer systems according to the present invention include medium temperature transport refrigeration systems that comprise a compressor, an evaporator, a condenser and an expansion device, in fluid communication with each other, Refrigerant 5, POE lubricant, Stabilizer 1.

The heat transfer systems according to the present invention include medium temperature transport refrigeration systems that comprise a compressor, an evaporator, a condenser and an expansion device, in fluid communication with each other, Refrigerant 5, POE lubricant, Stabilizer 1, and sequestration material selected from Sequestration Materials 1- 6.

The heat transfer systems according to the present invention include medium temperature transport refrigeration systems that comprise a compressor, an evaporator having an evaporator operating temperature of -12°C to about 0°C, a condenser and an expansion device, in fluid communication with each other, Refrigerant 5, POE lubricant, and stabilizer, including each of Stabilizers 1- 17.

The heat transfer systems according to the present invention include medium temperature chiller systems that comprise a compressor, an evaporator having an evaporator operating temperature of -12°C to about 0°C, a condenser and an expansion device, Refrigerant 5, a POE lubricant and Stabilizer 1.

The heat transfer systems according to the present invention include medium temperature chiller systems that comprise a compressor, an evaporator, a condenser and an expansion device, Refrigerant 5, a POE lubricant and Stabilizer 1.

The heat transfer systems according to the present invention include medium temperature chiller systems that comprise a compressor, an evaporator having an evaporator operating temperature of -10°C to about -6.7°C, a condenser and an expansion device, Refrigerant 5, a POE lubricant and Stabilizer 1.

The heat transfer systems according to the present invention include medium temperature chiller systems that comprise a compressor, an evaporator having an evaporator operating temperature of -10°C to about -6.7°C, a condenser and an expansion device, Refrigerant 5, a POE lubricant and Stabilizer 1 and sequestration material selected from Sequestration Materials 1 - 6.

The heat transfer systems according to the present invention include medium temperature chiller systems that comprise a compressor, an evaporator having an evaporator operating temperature of -12°C to about 0°C, a condenser and an expansion device, in fluid communication with each other, Refrigerant 5, POE lubricant, and stabilizer, including each of Stabilizers 1- 17.

The heat transfer systems according to the present invention include medium temperature supermarket refrigeration systems that comprise a compressor, an evaporator, a condenser and an expansion device, Refrigerant 5, a POE lubricant and Stabilizer 1.

The heat transfer systems according to the present invention include medium temperature supermarket refrigeration systems that comprise a compressor, an evaporator having an evaporator operating temperature of -12°C to about 0°C, a condenser and an expansion device, Refrigerant 5, a POE lubricant and Stabilizer 1.

The heat transfer systems according to the present invention include medium temperature supermarket refrigeration systems that comprise a compressor, an evaporator having an evaporator operating temperature of about -12°C to about 0°C, a condenser and an expansion device, Refrigerant 5, a POE lubricant, Stabilizer 1 and sequestration material selected from Sequestration Materials 1- 6.

The heat transfer systems according to the present invention include medium temperature supermarket refrigeration systems that comprise a compressor, an evaporator having an evaporator operating temperature of -12°C to about 0°C, a condenser and an expansion device, in fluid communication with each other, Refrigerant 5, POE lubricant, and stabilizer, including each of Stabilizers 1- 17.

The heat transfer systems according to the present invention include medium temperature supermarket refrigeration systems that comprise a compressor, an evaporator having an evaporator operating temperature of -10°C to about -6.7°C, a condenser and an expansion device, Refrigerant 5, a POE lubricant and Stabilizer 1.

The heat transfer systems according to the present invention include medium temperature supermarket refrigeration systems that comprise a compressor, an evaporator having an evaporator operating temperature of -10°C to about -6.7°C, a condenser and an expansion device, Refrigerant 5, a POE lubricant, Stabilizer 1 and sequestration material selected from Sequestration Materials 1- 6.

The heat transfer systems according to the present invention include medium temperature transport refrigeration systems that comprise a compressor, an evaporator, a condenser and an expansion device, in fluid communication with each other, Refrigerant 10, POE lubricant, Stabilizer 1.

The heat transfer systems according to the present invention include medium temperature transport refrigeration systems that comprise a compressor, an evaporator, a condenser and an expansion device, in fluid communication with each other, Refrigerant 10, POE lubricant, Stabilizer 1, and sequestration material selected from Sequestration Materials 1- 6.

The heat transfer systems according to the present invention include medium temperature transport refrigeration systems that comprise a compressor, an evaporator having an evaporator operating temperature of -12°C to about 0°C, a condenser and an expansion device, in fluid communication with each other, Refrigerant 10, POE lubricant, and stabilizer, including each of Stabilizers 1- 17.

The heat transfer systems according to the present invention include medium temperature chiller systems that comprise a compressor, an evaporator, a condenser and an expansion device, Refrigerant 10, a POE lubricant and Stabilizer 1.

The heat transfer systems according to the present invention include medium temperature chiller systems that comprise a compressor, an evaporator having an evaporator operating temperature of -12°C to about 0°C, a condenser and an expansion device, Refrigerant 10, a POE lubricant and Stabilizer 1.

The heat transfer systems according to the present invention include medium temperature chiller systems that comprise a compressor, an evaporator having an evaporator operating temperature of -12°C to about 0°C, a condenser and an expansion device, Refrigerant 10, a POE lubricant, Stabilizer 1 and sequestration material selected from Sequestration Materials 1 - 6.

The heat transfer systems according to the present invention include medium temperature chiller systems that comprise a compressor, an evaporator having an evaporator operating temperature of -10°C to about -6.7°C, a condenser and an expansion device, Refrigerant 10, a POE lubricant and Stabilizer 1 and sequestration material selected from Sequestration Materials 1 - 6.

The heat transfer systems according to the present invention include medium temperature chiller systems that comprise a compressor, an evaporator having an evaporator operating temperature of -12°C to about 0°C, a condenser and an expansion device, in fluid communication with each other, Refrigerant 10, POE lubricant, and stabilizer, including each of Stabilizers 1- 17.

The heat transfer systems according to the present invention include medium temperature supermarket refrigeration systems that comprise a compressor, an evaporator, a condenser and an expansion device, Refrigerant 10, a POE lubricant and Stabilizer 1.

The heat transfer systems according to the present invention include medium temperature supermarket refrigeration systems that comprise a compressor, an evaporator having an evaporator operating temperature of -12°C to about 0°C, a condenser and an expansion device, Refrigerant 10, a POE lubricant and Stabilizer 1.

The heat transfer systems according to the present invention include medium temperature supermarket refrigeration systems that comprise a compressor, an evaporator having an evaporator operating temperature of -12°C to about -0°C, a condenser and an expansion device, Refrigerant 10, a POE lubricant, Stabilizer 1 and sequestration material selected from Sequestration Materials 1- 6.

The heat transfer systems according to the present invention include medium temperature supermarket refrigeration systems that comprise a compressor, an evaporator having an evaporator operating temperature of -12°C to about 0°C, a condenser and an expansion device, in fluid communication with each other, Refrigerant 10, POE lubricant, and stabilizer, including each of Stabilizers 1- 17.

The heat transfer systems according to the present invention include medium temperature supermarket refrigeration systems that comprise a compressor, an evaporator having an evaporator operating temperature of -10°C to about -6.7°C, a condenser and an expansion device, Refrigerant 10, a POE lubricant and Stabilizer 1.

The heat transfer systems according to the present invention include medium temperature supermarket refrigeration systems that comprise a compressor, an evaporator having an evaporator operating temperature of -10°C to about -6.7°C, a condenser and an expansion device, Refrigerant 10, a POE lubricant, Stabilizer 1 and sequestration material selected from Sequestration Materials 1- 6.

For each of the of the medium temperature systems described herein, the systems have a degree of superheat at evaporator outlet of from about 0°C to about 10°C, and preferably with a degree of superheat at evaporator outlet of from about 4°C to about 6°C.

For each of the of the medium temperature systems described herein, the systems have a degree of superheat in the suction line of from about 5°C to about 40°C, and preferably with a degree of superheat in the suction line of from about 15°C to about 30°C.

For each of the medium temperature systems described herein, the condenser preferably operates with a condensing temperature in the range of from about 20°C to about 70°C, or preferably in the range of from about 20°C to about 60°C, or preferably in the range of from about 25°C to about 45°C.

### Cooling Methods

The present invention includes methods for providing cooling comprising:
(a) evaporating a refrigerant according to the present invention (including any refrigerant selected from each of Refrigerants 5-7 and 10-12), in the vicinity of the body or article or fluid to be cooled at a temperature of from about -40°C to about +10°C to produce a refrigerant vapor;
(b) compressing said refrigerant vapor to produce a refrigerant at discharge temperature of less than about 135°C; and
(c) condensing the refrigerant from said compressor at a temperature of from about 20°C to about 70°C to produce a refrigerant vapor.

Particular cooling methods are described in more detail below.

### Residential Air Conditioning

The present invention includes methods of providing residential air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor.

The present invention includes methods of providing residential air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor and cooled air at a temperature of from about 10°C to about 17°C;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor.

The present invention includes methods of providing residential air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor and cooled air at a temperature of from about 10°C to about 17°C;
(b) compressing said refrigerant vapor in a compressor lubricated with POE lubricant to produce a refrigerant at discharge temperature of less than about 135°C;
(c) condensing the refrigerant from said compressor at a temperature of from about 40°C to about 70°C to produce a refrigerant vapor; and
(d) exposing at least a portion of said refrigerant and/or at least a portion of said lubricant to a sequestration material of the present invention, including any of Sequestration Materials 1 - 6.

### Chillers

The present invention includes methods of providing chilled water to provide air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor.

The present invention includes methods of providing residential air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor and chilled water at a temperature of from about 5°C to about 10°C;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor.

The present invention includes methods of providing residential air conditioning in the cooling mode, said method comprising:
(a) evaporating a refrigerant according to the present invention (including any refrigerant selected from each of Refrigerants 5-7 and 10-12), at a temperature of from about 0°C to about 10°C to produce a refrigerant vapor and chilled water at a temperature of from about 5°C to about 10°C;
(b) compressing said refrigerant vapor in a compressor lubricated with POE lubricant to produce a refrigerant at discharge temperature of less than about 135°C;
(c) condensing the refrigerant from said compressor at a temperature of from about 40°C to about 70°C to produce a refrigerant vapor; and
(d) exposing at least a portion of said refrigerant and/or at least a portion of said lubricant to a sequestration material of the present invention, including any of Sequestration Materials 1 - 6

### Low Temperature Cooling Methods

The present invention also includes low temperature refrigeration methods for transferring heat, said method comprising:
(a) evaporating a refrigerant according to the present invention (including any refrigerant selected from each of Refrigerants 5-7 and 10-12), at a temperature of from about -40°C to about -12°C to produce a refrigerant vapor;
(b) compressing said refrigerant vapor to produce a refrigerant at discharge temperature of less than about 135°C; and
(c) condensing the refrigerant from said compressor at a temperature of from about 20°C to about 60°C to produce a refrigerant vapor.

The present invention also includes low temperature refrigeration methods for transferring heat, said method comprising:
(a) evaporating a refrigerant according to the present invention (including any refrigerant selected from each of Refrigerants 5-7 and 10-12), at a temperature of from about -40°C to about -12°C to produce a refrigerant vapor;
(b) compressing said refrigerant vapor to produce a refrigerant at discharge temperature of less than about 135°C; and
(c) condensing the refrigerant from said compressor at a temperature of from about 25°C to about 45°C to produce a refrigerant vapor.

The present invention also includes low temperature refrigeration methods for transferring heat, said method comprising:
(a) evaporating a refrigerant according to the present invention, including each of Refrigerants 1 -12, at a temperature in the range of from about -35°C to about -25°C to produce a refrigerant vapor;
(b) compressing said refrigerant vapor to produce a refrigerant at discharge temperature of less than about 135°C; and
(c) condensing the refrigerant from said compressor at a temperature of from about 25°C to about 45°C to produce a refrigerant vapor.

The present invention also includes low temperature refrigeration methods for transferring heat, said method comprising:
(a) evaporating a refrigerant according to the present invention, including each of Refrigerants 5-7 and 10-12, at a temperature in the range of from about -25°C to about - 12°C to produce a refrigerant vapor;
(b) compressing said refrigerant vapor to produce a refrigerant at discharge temperature of less than about 135°C; and
(c) condensing the refrigerant from said compressor at a temperature of from about 25°C to about 45°C to produce a refrigerant liquid.

The present invention also includes low temperature refrigeration methods for transferring heat, said method comprising:
(a) evaporating a refrigerant according to the present invention, including each of Refrigerants 5-7 and 10-12, at a temperature in the range of from about -25°C to about - 12°C to produce a refrigerant vapor;
(b) compressing said refrigerant vapor to produce a refrigerant at discharge temperature of less than about 135°C; and
(c) condensing the refrigerant from said compressor at a temperature in the range of from about 20°C to about 60°C to produce a refrigerant liquid.

The present invention also includes low temperature refrigeration methods for transferring heat, said method comprising:
(a) evaporating a refrigerant according to the present invention (including any refrigerant selected from each of Refrigerants 5-7 and 10-12), at a temperature of from about -40°C to about -12°C to produce a refrigerant vapor;
(b) compressing said refrigerant vapor in a compressor lubricated with a POE lubricant to produce a refrigerant at a discharge temperature of less than about 135°C;
(c) condensing the refrigerant from said compressor at a temperature of from about 20∘C to about 60∘C to produce a refrigerant vapor; and
(d) exposing at least a portion of said refrigerant and/or at least a portion of said lubricant to a sequestration material of the present invention, including any of Sequestration Materials 1 - 6.

The present invention also includes low temperature refrigeration methods for transferring heat, said method comprising:
(a) evaporating a refrigerant according to the present invention (including any refrigerant selected from each of Refrigerants 5-7 and 10-12), at a temperature of from about -40°C to -12°C to produce a refrigerant vapor;
(b) compressing said refrigerant vapor in a compressor lubricated with a POE lubricant to produce a refrigerant at discharge temperature of less than about 135°C;
(c) condensing the refrigerant from said compressor at a temperature of from about 25∘C to about 45∘C to produce a refrigerant vapor; and
(d) exposing at least a portion of said refrigerant and/or at least a portion of said lubricant to a sequestration material of the present invention, including any of Sequestration Materials 1 - 6.

The present invention also includes low temperature refrigeration methods for transferring heat, said method comprising:
(a) evaporating a refrigerant according to the present invention, including each of Refrigerants 5-7 and 10-12, at a temperature in the range of from about -35°C to about - 25°C to produce a refrigerant vapor;
(b) compressing said refrigerant vapor to in a compressor lubricated with a POE lubricant produce a refrigerant at discharge temperature of less than about 135°C;
(c) condensing the refrigerant from said compressor at a temperature of from about 25∘C to about 45∘C to produce a refrigerant vapor; and
(d) exposing at least a portion of said refrigerant and/or at least a portion of said lubricant to a sequestration material of the present invention, including any of Sequestration Materials 1 - 6.

The present invention also includes low temperature refrigeration methods for transferring heat, said method comprising:
(a) evaporating a refrigerant according to the present invention, including each of Refrigerants 5-7 and 10-12, at a temperature in the range of from about -25°C to -12°C to produce a refrigerant vapor;
(b) compressing said refrigerant vapor in a compressor lubricated with a POE lubricant to produce a refrigerant at discharge temperature of less than about 135°C;
(c) condensing the refrigerant from said compressor at a temperature of from about 25∘C to about 45∘C to produce a refrigerant liquid; and
(d) exposing at least a portion of said refrigerant and/or at least a portion of said lubricant to a sequestration material of the present invention, including any of Sequestration Materials 1 - 6.

The present invention also includes low temperature refrigeration methods for transferring heat, said method comprising:
(a) evaporating a refrigerant according to the present invention, including each of Refrigerants 5-7 and 10-12, at a temperature in the range of from about -25°C to -12°C to produce a refrigerant vapor;
(b) compressing said refrigerant vapor in a compressor lubricated with a POE lubricant to produce a refrigerant at discharge temperature of less than about 135°C;
(c) condensing the refrigerant from said compressor at a temperature in the range of from about 20°C to about 60°C to produce a refrigerant liquid; and
(d) exposing at least a portion of said refrigerant and/or at least a portion of said lubricant to a sequestration material of the present invention, including any of Sequestration Materials 1 - 6.

The present invention also includes low temperature refrigeration methods for transferring heat in a low temperature refrigeration system, said method comprising:
(a) evaporating a refrigerant according to the present invention (including any refrigerant selected from each of Refrigerants 5-7 and 10-12), at a temperature of from about -40°C to about -12°C to produce a refrigerant vapor;
(b) compressing said refrigerant vapor to produce a refrigerant at discharge temperature of less than about 135°C; and
(c) condensing the refrigerant from said compressor at a temperature of from about 20°C to about 60°C to produce a refrigerant vapor, wherein said method produces a capacity of from 97% to 93% in said system compared to the capacity of R-22 and an efficiency (COP) in said system greater than the efficiency of R-22 in said system.

The present invention provides low temperature refrigeration methods, including each of the low temperature methods as described in this section, where the refrigerant vapor has a degree of superheat at the evaporator outlet of from about 0°C to about 10°C and a degree of superheat in the suction line of from about 15°C to about 50°C.

### Medium Temperature Cooling Methods

The present invention also includes medium temperature refrigeration methods for transferring heat, said method comprising:
(a) evaporating a refrigerant according to the present invention (including any refrigerant selected from each of Refrigerants 5-7 and 10-12), at a temperature of from - 12°C to about 0°C to produce a refrigerant vapor;
(b) compressing said refrigerant vapor to produce a refrigerant at discharge temperature of less than about 135°C; and
(c) condensing the refrigerant from said compressor at a temperature of from about 20°C to about 60°C to produce a refrigerant vapor.

The present invention also includes medium temperature refrigeration methods for transferring heat, said method comprising:
(a) evaporating a refrigerant according to the present invention (including any refrigerant selected from each of Refrigerants 5-7 and 10-12), at a temperature of from about -10°C to about -6.7°C to produce a refrigerant vapor;
(b) compressing said refrigerant vapor to produce a refrigerant at discharge temperature of less than about 135°C; and
(c) condensing the refrigerant from said compressor at a temperature of from about 25°C to about 45°C to produce a refrigerant vapor.

The present invention also includes medium temperature refrigeration methods for transferring heat, said method comprising:
(a) evaporating a refrigerant according to the present invention, including each of Refrigerants 5-7 and 10-12, at a temperature in the range of to from about -12°C to about 0°C to produce a refrigerant vapor;
(b) compressing said refrigerant vapor to produce a refrigerant at discharge temperature of less than about 135°C; and
(c) condensing the refrigerant from said compressor at a temperature of from about 25°C to about 45°C to produce a refrigerant vapor.

The present invention also includes medium temperature refrigeration methods for transferring heat, said method comprising:
(a) evaporating a refrigerant according to the present invention (including any refrigerant selected from each of Refrigerants 5-7 and 10-12), at a temperature of from about -12°C to about 0°C to produce a refrigerant vapor;
(b) compressing said refrigerant vapor in a compressor lubricated with a POE lubricant to produce a refrigerant at a discharge temperature of less than about 135°C;
(c) condensing the refrigerant from said compressor at a temperature of from about 20°C to about 60°C to produce a refrigerant vapor; and
(d) exposing at least a portion of said refrigerant and/or at least a portion of said lubricant to a sequestration material of the present invention, including any of Sequestration Materials 1 - 6.

The present invention also includes medium temperature refrigeration methods for transferring heat, said method comprising:
(a) evaporating a refrigerant according to the present invention (including any refrigerant selected from each of Refrigerants 5-7 and 10-12), at a temperature of from about -12°C to about 0°C to produce a refrigerant vapor;
(b) compressing said refrigerant vapor in a compressor lubricated with a POE lubricant to produce a refrigerant at discharge temperature of less than about 135°C;
(c) condensing the refrigerant from said compressor at a temperature of from about 25°C to about 45°C to produce a refrigerant vapor; and
(d) exposing at least a portion of said refrigerant and/or at least a portion of said lubricant to a sequestration material of the present invention, including any of Sequestration Materials 1 - 6.

The present invention also includes medium temperature refrigeration methods for transferring heat, said method comprising:
(a) evaporating a refrigerant according to the present invention, including each of Refrigerants 5-7 and 10-12, at a temperature in the range of to from about -10°C to about - 6.7°C to produce a refrigerant vapor;
(b) compressing said refrigerant vapor to in a compressor lubricated with a POE lubricant produce a refrigerant at discharge temperature of less than about 135oC;
(c) condensing the refrigerant from said compressor at a temperature of from about 25°C to about 45°C to produce a refrigerant vapor; and
(d) exposing at least a portion of said refrigerant and/or at least a portion of said lubricant to a sequestration material of the present invention, including any of Sequestration Materials 1 - 6.

The present invention provides medium temperature refrigeration methods, including each of the low temperature methods as described in this section, where the refrigerant vapor has a degree of superheat at evaporator outlet of from about 0°C to about 10°C and a degree of superheat in the suction line of from about 15°C to about 50°C.

The present invention provides medium temperature refrigeration methods, including each of the low temperature methods as described in this section, where the refrigerant vapor has and a degree of superheat at evaporator outlet of from about 4°C to about 6°C and a degree of superheat in the suction line of from about 25°C to about 30°C.

### Heating Methods

The present invention includes methods for providing heating comprising:
(a) evaporating a refrigerant according to the present invention (including any refrigerant selected from each of Refrigerants 5-7 and 10-12) at a temperature of from about -30°C to about +5°C to produce a refrigerant vapor;
(b) compressing said refrigerant vapor to produce a refrigerant at discharge temperature of less than about 135°C; and
(c) condensing the refrigerant from said compressor in the vicinity of the body or article or fluid to be heated, said condensing occurring at a temperature of from about 40°C to about 70°C to produce a refrigerant vapor.

Particular heating methods are described in more detail below.

### Residential Air Conditioning

The present invention includes methods of providing residential air conditioning in the heating mode, said method comprising:
(a) evaporating a refrigerant according to the present invention (including any refrigerant selected from each of Refrigerants 5-7 and 10-12), at a temperature of from about -20°C to about 3°C to produce a refrigerant vapor;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor.

The present invention includes methods of providing residential air conditioning in the heating mode, said method comprising:
(a) evaporating a refrigerant according to the present invention (including any refrigerant selected from each of Refrigerants 5-7 and 10-12), at a temperature of from about 0.5°C to produce a refrigerant vapor;
(b) compressing said refrigerant vapor to produce a refrigerant at discharge temperature of less than about 135°C; and
(c) condensing the refrigerant from said compressor at a temperature of from about 40°C to about 70°C to produce a refrigerant vapor and heated air at a temperature of from about 18°C to about 24°C.

The present invention includes methods of providing residential air conditioning in the heating mode, said method comprising:
(a) evaporating a refrigerant according to the present invention (including any refrigerant selected from each of Refrigerants 5-7 and 10-12), at a temperature of from about 0°C to about 10°C to produce a refrigerant vapor;
(b) compressing said refrigerant vapor in a compressor lubricated with POE lubricant to produce a refrigerant at discharge temperature of less than about 135°C;
(c) condensing the refrigerant from said compressor at a temperature of from about 40°C to about 70°C to produce a refrigerant vapor; and
(d) exposing at least a portion of said refrigerant and/or at least a portion of said lubricant to a sequestration material of the present invention, including any of Sequestration Materials 1 - 6.

### Residential Air to Water Heat Pump Hydronic System

The present invention includes methods of providing heating in a residential air to water heat pump, said method comprising:
(a) evaporating a refrigerant according to the present invention (including any refrigerant selected from each of Refrigerants 5-7 and 10-12), at a temperature of from about -30°C to about 5°C to produce a refrigerant vapor;
(b) compressing said refrigerant vapor to produce a refrigerant at discharge temperature of less than about 135°C; and
(c) condensing the refrigerant from said compressor at a temperature of from about 50°C to about 90°C to produce a refrigerant vapor.

The present invention includes methods of providing heating in a residential air to water heat pump, said method comprising:
(a) evaporating a refrigerant according to the present invention (including any refrigerant selected from each of Refrigerants 5-7 and 10-12), at a temperature of from about -20°C to about 3°C to produce a refrigerant vapor;
(b) compressing said refrigerant vapor to produce a refrigerant at discharge temperature of less than about 135°C; and
(c) condensing the refrigerant from said compressor at a temperature of from about 50°C to about 90°C to produce a refrigerant vapor.

The present invention includes methods of providing heating in a residential air to water heat pump, said method comprising:
(a) evaporating a refrigerant according to the present invention (including any refrigerant selected from each of Refrigerants 5-7 and 10-12), at a temperature of from about -30°C to about 5°C to produce a refrigerant vapor;
(b) compressing said refrigerant vapor to produce a refrigerant at discharge temperature of less than about 135°C; and
(c) condensing the refrigerant from said compressor at a temperature of from about 50°C to about 90°C to produce a refrigerant vapor and heated water at a temperature of from about 50°C to about 55°C.

The present invention includes methods of providing heating in a residential air to water heat pump, said method comprising:
(a) evaporating a refrigerant according to the present invention (including any refrigerant selected from each of Refrigerants 5-7 and 10-12), at a temperature of from about -30°C to about 5°C to produce a refrigerant vapor;
(b) compressing said refrigerant vapor in a compressor lubricated with POE lubricant to produce a refrigerant at discharge temperature of less than about 135°C;
(c) condensing the refrigerant from said compressor at a temperature of from about 40°C to about 70°C to produce a refrigerant vapor; and
(d) exposing at least a portion of said refrigerant and/or at least a portion of said lubricant to a sequestration material of the present invention, including any of Sequestration Materials 1 - 6.

### Uses

### Residential Air Conditioning

The present invention therefore includes the use of a heat transfer composition comprising Refrigerant 5, in residential air conditioning.

The present invention therefore includes the use of a heat transfer composition comprising Refrigerant 6, in residential air conditioning.

The present invention therefore includes the use of a heat transfer composition comprising Refrigerant 7, in a residential air conditioning.

The present invention therefore includes the use of a heat transfer composition comprising Refrigerant 10, in a residential air conditioning.

The present invention therefore includes the use of a heat transfer composition comprising Refrigerant 11, in a residential air conditioning.

The present invention therefore includes the use of a heat transfer composition comprising Refrigerant 12, in residential air conditioning.

### Chillers

The present invention therefore includes the use of a heat transfer composition comprising Refrigerant 5, in a chiller.

The present invention therefore includes the use of a heat transfer composition comprising Refrigerant 6, in a chiller.

The present invention therefore includes the use of a heat transfer composition comprising Refrigerant 7, in a residential air conditioning.

The present invention therefore includes the use of a heat transfer composition comprising Refrigerant 10, in a chiller.

The present invention therefore includes the use of a heat transfer composition comprising Refrigerant 11, in a chiller.

The present invention therefore includes the use of a heat transfer composition comprising Refrigerant 12, in a chiller.

### Low Temperature Refrigeration

The present invention therefore includes the use of a heat transfer composition comprising Refrigerant 5, in a low temperature refrigeration system.

The present invention therefore includes the use of a heat transfer composition comprising Refrigerant 6, in a low temperature refrigeration system.

The present invention therefore includes the use of a heat transfer composition comprising Refrigerant 7, in a low temperature refrigeration system.

The present invention therefore includes the use of a heat transfer composition comprising Refrigerant 10, in a low temperature refrigeration system.

The present invention therefore includes the use of a heat transfer composition comprising Refrigerant 11, in a low temperature refrigeration system.

The present invention therefore includes the use of a heat transfer composition comprising Refrigerant 12, in a low temperature refrigeration system.

### Medium Temperature Refrigeration

The present invention therefore includes the use of a heat transfer composition comprising Refrigerant 5, in a medium temperature refrigeration system.

The present invention therefore includes the use of a heat transfer composition comprising Refrigerant 6, in a medium temperature refrigeration system.

The present invention therefore includes the use of a heat transfer composition comprising Refrigerant 7, in a medium temperature refrigeration system.

The present invention therefore includes the use of a heat transfer composition comprising Refrigerant 10, in a medium temperature refrigeration system.

The present invention therefore includes the use of a heat transfer composition comprising Refrigerant 11, in a medium temperature refrigeration system.

The present invention therefore includes the use of a heat transfer composition comprising Refrigerant 12, in a medium temperature refrigeration system.

### Retrofit and Replacement

The heat transfer compositions and the refrigerants of the present invention (including each of Refrigerants 5-7 and 10-12 and all heat transfer compositions containing Refrigerants 5-7 and 10-12) therefore can be used as a retrofit refrigerant/heat transfer composition or as a replacement refrigerant/heat transfer composition.

The present invention thus includes methods of retrofitting existing heat transfer system designed for and containing R-22 refrigerant, without requiring substantial engineering modification of the existing system, particularly without modification of the condenser, the evaporator and/or the expansion valve.

The present invention thus also includes methods of using a refrigerant or heat transfer composition of the present invention (including each of Refrigerants 5-7 and 10-12 and all heat transfer compositions containing Refrigerants 5-7 and 10-12) as a retrofit for R-22, and in particular as a retrofit for R-22 in a low temperature refrigeration system, without requiring substantial engineering modification of the existing system, particularly without modification of the condenser, the evaporator and/or the expansion valve.

The present invention thus also includes methods of using a refrigerant or heat transfer composition of the present invention (including each of Refrigerants 5-7 and 10-12 and all heat transfer compositions containing Refrigerants 5-7 and 10-12) as a retrofit for R-22, and in particular as a replacement for R-22 in a medium temperature refrigeration system, without requiring substantial engineering modification of the existing system, particularly without modification of the condenser, the evaporator and/or the expansion valve.

The present invention thus also includes methods of using a refrigerant or heat transfer composition of the present invention (including each of Refrigerants 5-7 and 10-12 and all heat transfer compositions containing Refrigerants 5-7 and 10-12) as a replacement for R-22 in a low temperature refrigeration system.

The present invention thus also includes methods of using a refrigerant or heat transfer composition of the present invention (including each of Refrigerants 5-7 and 10-12 and all heat transfer compositions containing Refrigerants 5-7 and 10-12) as a replacement for R-22 in a medium temperature refrigeration system.

The present invention thus also includes methods of using a refrigerant or heat transfer composition of the present invention (including each of Refrigerants 5-7 and 10-12 and all heat transfer compositions containing Refrigerants 5-7 and 10-12) as a replacement for R-404A, and in particular as a replacement for R-404A in a low temperature refrigeration system.

The present invention thus also includes methods of using a refrigerant or heat transfer composition of the present invention (including each of Refrigerants 5-7 and 10-12 and all heat transfer compositions containing Refrigerants 5-7 and 10-12) as a replacement for R-404A, and in particular as a replacement for R-404A in a medium temperature refrigeration system,

### Equipment for the Systems, Methods and Uses

Examples of commonly used compressors, for the purposes of this invention include reciprocating, rotary (including rolling piston and rotary vane), scroll, screw, and centrifugal compressors. Thus, the present invention provides each and any of the refrigerants, including each of Refrigerants 5-7 and 10-12, and/or heat transfer compositions as described herein, including those containing any one of Refrigerants 5-7 and 10-12, for use in a heat transfer system comprising a reciprocating, rotary (including rolling piston and rotary vane), scroll, screw, or centrifugal compressor.

Examples of commonly used expansion devices, for the purposes of this invention include a capillary tube, a fixed orifice, a thermal expansion valve and an electronic expansion valve. Thus, the present invention provides each and any of the refrigerants, including each of Refrigerants 5-7 and 10-12, and/or heat transfer compositions, including those containing any one of Refrigerants 5-7 and 10-12, as described herein for use in a heat transfer system comprising a capillary tube, a fixed orifice, a thermal expansion valve or an electronic expansion valve.

For the purposes of this invention, the evaporator and the condenser can each independently be selected from a finned tube heat exchanger, a microchannel heat exchanger, a shell and tube, a plate heat exchanger, and a tube-in-tube heat exchanger. Thus, the present invention provides each and any of the refrigerants and/or heat transfer compositions as described herein for use in a heat transfer system wherein the evaporator and condenser together form a finned tube heat exchanger, a microchannel heat exchanger, a shell and tube, a plate heat exchanger, or a tube-in-tube heat exchanger.

The heat transfer composition of the invention can be used in heating and cooling applications. In a particular feature of the invention, the heat transfer composition can be used in a method of cooling comprising condensing a heat transfer composition and subsequently evaporating said composition in the vicinity of an article or body to be cooled.

The heat transfer composition of the invention is provided for use in a low temperature refrigeration systems, including use in each of the following:
- low temperature commercial refrigerator,
- a low temperature commercial freezer,
- an ice making machine,
- a vending machine,
- a low temperature transport refrigeration system,
- an industrial freezer,
- an industrial refrigerator and
- a low temperature chiller.

The heat transfer composition of the invention is provided for use in a medium temperature refrigeration system, wherein the medium temperature refrigeration system is preferably used to chill food or beverages such as in a refrigerator or a bottle cooler. The system usually has an air-to-refrigerant evaporator to chill the food or beverage, a reciprocating, scroll or screw or rotary compressor, an air-to-refrigerant condenser to exchange heat with the ambient air, and a thermal or electronic expansion valve.

The heat transfer composition of the invention is provided for use in a low temperature refrigeration system, wherein said low temperature refrigeration system is preferably used in a freezer or an ice making machine. The system usually has an air-to-refrigerant evaporator to chill the food or beverage, a reciprocating, scroll or rotary compressor, an air-to-refrigerant condenser to exchange heat with the ambient air, and a thermal or electronic expansion valve.

Each of the heat transfer compositions described herein, including heat transfer compositions containing any one of Refrigerants 5-7 and 10-12, is particularly provided for use in a low temperature system with a reciprocating, rotary (rolling-piston or rotary vane) or scroll compressor.

Each of the heat transfer compositions described herein, including heat transfer compositions containing any one of Refrigerants 5-7 and 10-12, is particularly provided for use in a medium temperature system with a reciprocating, rotary (rolling-piston or rotary vane) or scroll compressor.

The heat transfer compositions and the refrigerants of the present invention (including each of Refrigerants 5-7 and 10-12 and all heat transfer compositions containing Refrigerants 5-7 and 10-12) therefore can be used as a replacement refrigerant/heat transfer composition or a retrofit for the refrigerant R-22.

The heat transfer compositions and the refrigerants of the present invention (including each of Refrigerants 5-7 and 10-12 and all heat transfer compositions containing Refrigerants 5-7 and 10-12) therefore can be used as a replacement refrigerant/heat transfer composition for the refrigerant R-404A.

The present invention thus includes methods of replacing the refrigerant in a heat transfer system designed for or suitable for use with R-22 refrigerant.

The present invention thus includes methods of replacing the refrigerant in a heat transfer system designed for or suitable for use with R-404A refrigerant.

The present invention also includes methods of retrofitting an existing heat transfer system containing R-22, including particularly low and medium temperature refrigeration systems, by removing at least a portion of the R-22 from the system and then adding to the system a the refrigerant of the present invention, including each of Refrigerants 5-7 and 10-12.

It will be appreciated that when the heat transfer composition is used as a low GWP replacement for R-404A, stem, or is used in a heat transfer system, which is suitable for use with designed to contain or containing R-22 refrigerant, or is used in a heat transfer system which is suitable for use with R-22 refrigerant, the heat transfer composition may consist essentially of the refrigerant of the invention. Alternatively, the invention encompasses the use of the refrigerant of the invention as a low GWP replacement for R-22, in a heat transfer system suitable for use with R-22 refrigerant as described herein.

The compositions of the present invention exhibit many of the desirable characteristics of R-22 but have a GWP that is substantially lower than that of R-22 while at the same time having operating characteristics i.e. capacity and efficiency (COP) that are substantially similar to or substantially match R-22. This allows the claimed compositions to replace R-22 in existing heat transfer systems without requiring any significant system modification for example of the condenser, the evaporator and/or the expansion valve. The composition can therefore be used as a direct replacement in retrofitting heat exchange systems which have been used with or are suitable for use with R-22.

The refrigerants of the invention, including each of Refrigerants 5-7 and 10-12, therefore preferably exhibit operating characteristics compared with R-22 wherein the efficiency (COP) of the composition is from 95 to 105% of the efficiency of R-22 in heat transfer systems, in which the compositions of the invention are to replace the R-22 refrigerant.

The refrigerants of the invention, including each of Refrigerants 5-7 and 10-12, therefore preferably exhibits operating characteristics compared with R-22 wherein the capacity of the composition is from 97 to 103% of the capacity of R-22 in heat transfer systems, in which the compositions of the invention are to replace the R-22 refrigerant.

The refrigerants of the invention, including each of Refrigerants 5-7 and 10-12, therefore preferably exhibits operating characteristics compared with R-22 wherein the capacity of the composition is from 97 to 103% of the capacity of R-22 in heat transfer systems and wherein the efficiency (COP) is equal to or greater than the efficiency of R-22 in the heat transfer system, in which the compositions of the invention are to replace the R-22 refrigerant.

Preferably, the refrigerants of the invention, including each of Refrigerants 5-7 and 10-12, preferably exhibit operating characteristics compared with R-22A wherein the efficiency (COP) of the composition is from 100 to 105% of the efficiency of R-22 in heat transfer systems, in which the compositions of the invention are to replace the R-22 refrigerant.

In order to maintain reliability of the heat transfer system, it is preferred that the composition of the invention further exhibits the following characteristics compared with R-22:
- the discharge temperature is not greater than 10°C higher than that of R-22; and
- the compressor pressure ratio is from 95 to 105% of the compressor pressure ratio of R-22
in heat transfer systems, in which the composition of the invention is used to replace the R-22 refrigerant.

There is therefore provided a method of retrofitting an existing heat transfer system designed to contain or containing R-22 refrigerant or which is suitable for use with R-22 refrigerant, said method comprising replacing at least a portion of the existing R-22 refrigerant with a heat transfer composition comprising Refrigerant 5.

There is therefore provided a method of retrofitting an existing heat transfer system designed to contain or containing R-22 refrigerant or which is suitable for use with R-22 refrigerant, said method comprising replacing at least a portion of the existing R-22 refrigerant with a heat transfer composition comprising Refrigerant 6.

There is therefore provided a method of retrofitting an existing heat transfer system designed to contain or containing R-404A refrigerant or which is suitable for use with R-404 refrigerant, said method comprising replacing at least a portion of the existing R-404A refrigerant with a heat transfer composition comprising Refrigerant 7.

There is therefore provided a method of retrofitting an existing heat transfer system designed to contain or containing R-22 refrigerant or which is suitable for use with R-22 refrigerant, said method comprising replacing at least a portion of the existing R-22 refrigerant with a heat transfer composition comprising Refrigerant 10.

There is therefore provided a method of retrofitting an existing heat transfer system designed to contain or containing R-22 refrigerant or which is suitable for use with R-22 refrigerant, said method comprising replacing at least a portion of the existing R-22 refrigerant with a heat transfer composition comprising Refrigerant 11.

There is therefore provided a method of retrofitting an existing heat transfer system designed to contain or containing R-22 refrigerant or which is suitable for use with R-22 refrigerant, said method comprising replacing at least a portion of the existing R-22 refrigerant with a heat transfer composition comprising Refrigerant 12.

The step of replacing, including as recited in each of the preceding paragraphs, preferably comprises removing at least a substantial portion of, and preferably substantially all of, the existing refrigerant (which can be but is not limited to R-22) and introducing a heat transfer composition or a refrigerant of the present invention, including each of Refrigerants 5-7 and 10-12, without any substantial modification of the system to accommodate the refrigerant of the present invention.

In preferred retrofitting embodiments, including those embodiments described above, the removing step comprises removing at least about 5%, about 10%, about 25%, about 50% or about 75% by weight of the R-22 from the existing system and replacing it with the heat transfer compositions of the invention

The composition of the invention is alternatively provided to replace R-22 in refrigeration systems. Thus, each of the heat transfer compositions as described herein, including heat transfer compositions that include any one of Refrigerants 5-7 and 10-12 can be used to replace R-22 in any one of the systems disclosed herein.

There is therefore provided a method of using Refrigerant 5 to replace R-22 as a replacement in a heat transfer system designed to contain or suitable for use with R-22 refrigerant.

There is therefore provided a method of using Refrigerant 10 to replace R-22 as a replacemnt in a heat transfer system designed to contain or suitable for use with R-22 refrigerant.

There is therefore provided a method of using Refrigerant 5 to replace R-404 as a replacement in a heat transfer system designed to contain or suitable for use with R-404A refrigerant.

There is therefore provided a method of using Refrigerant 10 to replace R-404A as a replacemnt in a heat transfer system designed to contain or suitable for use with R-404A refrigerant.

The present invention relates to the use of in a medium or low temperature refrigeration system of Refrigerant 5 wherein the Refrigerant 5
(a) has an efficiency (COP) from about 95% to about 105% of the efficiency of R22 in said system and/or used in said method; and
(b) is non-flammable as determined in accordance with the Non-Flammability Test.

The present invention relates to the use of in a medium or low temperature refrigeration system of Refrigerant 10 wherein the Refrigerant 10
(a) has an efficiency (COP) from about 95% to about 105% of the efficiency of R22 in said system and/or used in said method; and
(b) is non-flammable as determined in accordance with the Non-Flammability Test.

### EXAMPLES

The refrigerant compositions identified in Table 1 below were determined as described herein. Each composition was subjected to thermodynamic analysis to determine its ability to match the operating characteristics of R-404A in various refrigeration systems. The analysis was performed using experimental data collected for properties of various binary pairs of components used in the composition. The vapor/liquid equilibrium behavior of CF₃I was determined and studied in a series of binary pairs with each of HFC-32 and R1234yf. The composition of each binary pair was varied over a series of relative percentages in the experimental evaluation and the mixture parameters for each binary pair were regressed to the experimentally obtained data. Standard mixing parameters were available for the binary pair of HFC-32 and R1234yf in the National Institute of Science and Technology (NIST) Reference Fluid Thermodynamic and Transport Properties Database software (Refprop 9.1 NIST Standard Database 2013). The assumptions used to conduct the analysis were the following: same compressor displacement for all refrigerants, same operating conditions for all refrigerants, same compressor isentropic and volumetric efficiency for all refrigerants. In each Example, simulations were conducted using the measured vapor liquid equilibrium data. The simulation results are reported for each Example.

**Table 1: Refrigerants evaluated for Performance Examples**

| **Refrigerant** | **R32 (wt%)** | **CF3I (wt%)** | **R1234yf (wt%)** | **GWP** | **Flammability** |
|---|---|---|---|---|---|
| **A1 (Example)** | **21.5%** | **69.5%** | **9%** | **146** | **Non-Flammable** |
| **A2 (Comparative)** | **21.5%** | **65.5%** | **13%** | **146** | **Non-Flammable** |
| **A3 (Comparative)** | **17%** | **70%** | **13%** | **116** | **Non-Flammable** |

### Example 1 - Residential Air-Conditioning System (Cooling)

A residential air-conditioning system used to supply cool air (26.7°C) to buildings in the summer is tested. Refrigerants A1, A2, and A3 were used in this simulation of a residential air-conditioning system as described above and the performance results are reported in Table 2. Operating conditions were: Condensing temperature= 46°C; Condenser sub-cooling= 5.5°C; Evaporating temperature= 7°C; Evaporator Superheat= 5.5°C; Isentropic Efficiency= 70%; Volumetric Efficiency= 100%; and Temperature Rise in Suction Line=5.5°C.

**Table 2. Performance in Residential Air-Conditioning System (Cooling)**

| Refrigeran t | Capacity (% of R22) | Efficiency (% of R22) | Power Consumptio n (% of R22) | Compress or Pressure ratio (% of R22) | Discharge Temperatur e (°C) |
|---|---|---|---|---|---|
| R22 | 100% | 100% | 100% | 100% | 86.9 |
| A1 | 106% | 97% | 109% | 101% | 91.3 |
| A2 | 106% | 97% | 109% | 101% | 89.3 |
| A3 | 99% | 99% | 100% | 102% | 88.5 |

As shown in Table 2, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 2 - Residential Air-Conditioning System (High Ambient)

A residential air-conditioning system used to supply cool air (26.7°C) to buildings in the summer is tested using refrigerants A1, A2, and A3 and the performance results are reported in Table 3. Operating conditions were: Condensing temperature= 63.4°C; Condenser sub-cooling= 5.5°C; Evaporating temperature= 14.9°C; Evaporator Superheat= 5.5°C; Isentropic Efficiency= 63%;Volumetric Efficiency= 100%; Temperature Rise in Suction Line=5.5°C.

**Table 3. Performance in Residential Air-Conditioning System (Cooling)**

| Refrigeran t | Capacity (% of R22) | Efficiency (% of R22) | Power Consumptio n (% of R22) | Compress or Pressure ratio (% of R22) | Discharge Temperatur e (°C) |
|---|---|---|---|---|---|
| R22 | 100% | 100% | 100% | 100% | 111.6 |
| A1 | 103% | 95% | 109% | 103% | 117.5 |
| A2 | 103% | 95% | 108% | 103% | 115.1 |
| A3 | 96% | 97% | 99% | 104% | 114.0 |

As shown in Table 3, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 3 - Residential Heat pump System (Heating)

A residential heat pump system used to supply warm air (21.1°C) to buildings in the winter is tested with refrigerants A1, A2, and A3 and the performance results are reported in Table 4. Operating conditions were: Condensing temperature= 41°C; Condenser sub-cooling= 5.5°C; Evaporating temperature= 0.5°C; Evaporator Superheat= 5.5°C; Isentropic Efficiency= 70%; Volumetric Efficiency= 100%; and Temperature Rise in Suction Line=5.5°C.

**Table 4. Performance in Residential Heat pump System (Heating)**

| Refrigeran t | Capacity (% of R22) | Efficiency (% of R22) | Power Consumptio n (% of R22) | Compress or Pressure ratio (% of R22) | Discharge Temperatur e (°C) |
|---|---|---|---|---|---|
| R22 | 100% | 100% | 100% | 100% | 85.2 |
| A1 | 106% | 98% | 109% | 101% | 89.6 |
| A2 | 106% | 98% | 109% | 101% | 87.5 |
| A3 | 99% | 99% | 100% | 102% | 86.6 |

As shown in Table 4, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 4 - Commercial Air-Conditioning System - Chiller

A commercial air-conditioning system (chiller) used to supply chilled water (7°C) to large buildings (such as office and hospital buildings) is tested and the performance results are reported in Table 5. Operating conditions were: Condensing temperature= 46°C; Condenser sub-cooling= 5.5°C; Evaporating temperature= 4.5°C; Evaporator Superheat= 5.5°C; Isentropic Efficiency= 70%; Volumetric Efficiency= 100%; and Temperature Rise in Suction Line=2°C.

**Table 5. Performance in Commercial Air-Conditioning System - Air-Cooled Chiller**

| Refrigeran t | Capacity (% of R22) | Efficiency (% of R22) | Power Consumptio n (% of R22) | Compress or Pressure ratio (% of R22) | Discharge Temperatur e (°C) |
|---|---|---|---|---|---|
| R22 | 100% | 100% | 100% | 100% | 85.5 |
| A1 | 106% | 97% | 109% | 101% | 90.1 |
| A2 | 105% | 97% | 108% | 101% | 88.1 |
| A3 | 98% | 99% | 100% | 102% | 87.2 |

As shown in Table 5, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 5 - Residential Air-to-Water Heat Pump Hydronic System

A residential air-to-water heat pump hydronic system used to supply hot water (50°C) to buildings for floor heating or similar applications in the winter is tested with Refrigerants A1, A2, and A3 and the performance results are reported in Table 6. Operating conditions were: Condensing temperature= 60°C; Condenser sub-cooling= 5.5°C; Evaporating temperature= 0.5°C; Evaporator Superheat= 5.5°C; Isentropic Efficiency= 70%; Volumetric Efficiency= 100%; and Temperature Rise in Suction Line=2°C.

**Table 6. Performance in Residential Air-to-Water Heat Pump Hydronic System**

| Refrigerant | Capacity (% of R22) | Efficiency (% of R22) | Power Consumption (% of R22) | Compressor Pressure ratio (% of R22) | Discharge Temperature (°C) |
|---|---|---|---|---|---|
| R22 | 100% | 100% | 100% | 100% | 111.6 |
| A1 | 103% | 96% | 108% | 103% | 116.1 |
| A2 | 102% | 95% | 107% | 103% | 113.3 |
| A3 | 95% | 97% | 98% | 104% | 111.6 |

As shown in Table 6, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 6 - Medium Temperature Refrigeration System

A medium temperature refrigeration system used to chill the food or beverage such as in refrigerator and bottle cooler is tested with refrigerants A1, A2, and and the performance results are reported in Table 7. Operating conditions were: Condensing temperature= 40.6°C; Condenser sub-cooling= 0°C (system with receiver); Evaporating temperature= -6.7°C; Evaporator Superheat= 5.5°C; Isentropic Efficiency= 70%; Volumetric Efficiency= 100%; Degree of superheat in the suction line = 19.5°C.

**Table 7. Performance in Medium Temperature Refrigeration System**

| Refrigeran t | Capacity (% of R22) | Efficiency (% of R22) | Power Consumptio n (% of R22) | Compress or Pressure ratio (% of R22) | Discharge Temperatur e (°C) |
|---|---|---|---|---|---|
| R22 | 100% | 100% | 100% | 100% | 108.0 |
| R404A | 97% | 86% | 112% | 97% | 80.2 |
| A1 | 105% | 97% | 109% | 102% | 112.3 |
| A2 | 105% | 97% | 108% | 102% | 109.7 |
| A3 | 97% | 98% | 99% | 103% | 108.3 |

As shown in Table 7, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed. Refrigerants A1 to A3 show a discharge temperature of less than 120°C, indicating good compressor reliability.

### Example 7 - Low Temperature Refrigeration System

A low temperature refrigeration system used to freeze the food such as in ice cream machine and freezer is tested using refrigerants A1, A2, and A3 and the performance results are in Table 8. Operating conditions were: Condensing temperature= 40.6°C; Condenser sub-cooling= 0°C (system with receiver); Evaporating temperature= -28.9°C; Degree of superheat at evaporator outlet = 5.5°C; Isentropic Efficiency= 65%; Volumetric Efficiency= 100%; Degree of superheat in the suction line = 44.4°C.

**Table 8. Performance in Low Temperature Refrigeration System**

| Refrigeran t | Capacity (% of R22) | Efficiency (% of R22) | Power Consumptio n (% of R22) | Compress orPressure ratio (% of R22) | Discharge Temperatur e (°C) |
|---|---|---|---|---|---|
| R22 | 100% | 100% | 100% | 100% | 177.0 |
| R404A | 91% | 81% | 113% | 96% | 123.5 |
| A1 | 105% | 97% | 105% | 102% | 179.9 |
| A2 | 103% | 96% | 106% | 102% | 175.1 |
| A3 | 95% | 98% | 99% | 104% | 172.2 |

As shown in Table 8, Refrigerants A1 to A3 show 95% or higher capacity and efficiency compared to R22. Furthermore, Refrigerants A1 to A3 show 110% or lower power consumption compared to R22 indicating that the same R22 compressor electric motor can be used, and compressor pressure ratios of 95 to 105% of R22 indicate that no changes on R22 compressor are needed.

## Claims

1. A refrigerant comprising at least about 98.5% by weight of the following three compounds, with each compound being present in the following relative percentages:
69.5±2% by weight trifluoroiodomethane (CF₃I);
9±2% by weight 1,1,1,2-tetrafluoropropene (HFO-1234yf); and
21.5±0.5% by weight difluoromethane (HFC-32).

2. The refrigerant of claim 1 comprising at least about 98.5% by weight of said three compounds with each compound being present in the following relative percentages:
69.5% by weight trifluoroiodomethane (CF₃I);
9% by weight 1,1,1,2-tetrafluoropropene (HFO-1234yf); and
21.5% by weight difluoromethane (HFC-32).

3. The refrigerant of any preceding claim consisting of said three compounds.

4. A heat transfer composition comprising the refrigerant of any preceding claim.

5. A heat transfer composition of claim 4, further comprising a stabilizer selected from an alkylated naphthalene, a diene-based compound, a phenol compound and combinations of two or more of these, and a lubricant selected from the group consisting of polyol esters (POEs), mineral oil, alkylbenzenes (ABs) and polyvinyl ethers (PVE).

6. A method for transferring heat of the type comprising evaporating refrigerant liquid to produce a refrigerant vapor, compressing in a compressor at least a portion of the refrigerant vapor and condensing refrigerant vapor, said method comprising:
(a) providing a refrigerant as defined in any of claims 1 to 3;
(b) evaporating said refrigerant at a temperature of from -40°C to +10°C.

7. The method of claim 6 further comprising providing lubricant for said compressor and exposing at least a portion of said refrigerant and/or at least a portion of said lubricant to a sequestration material comprising:
i. activated alumina, or
ii. a zeolite molecular sieve comprising copper, silver, lead or a combination thereof, or
iii. an anion exchange resin, or
iv. a moisture-removing material, preferably a moisture-removing molecular sieve, or
v. a combination of two or more of the above.

8. A heat transfer system the type comprising an evaporator, a compressor, and a refrigerant in the system, said system comprising:
(a) said refrigerant being in accordance with any of claims 1 to 3; and
(a) a sequestration material comprising:
i. activated alumina, and
ii. a zeolite molecular sieve comprising copper, silver, lead or a combination thereof, and
iii. an anion exchange resin, and
iv. a moisture-removing material, preferably a moisture-removing molecular sieve.

9. Use of a heat transfer composition in accordance with claim 4 or claim 5 to replace R-404A or R-22 for heating and cooling applications in medium and low temperature refrigerant systems.

10. Use of a heat transfer composition in accordance with claim 4 or claim 5, in a heat transfer system.

## Patentansprüche

1. Kältemittel, umfassend mindestens etwa 98,5 Gew.-% der folgenden drei Verbindungen, wobei jede Verbindung in den folgenden relativen Prozentsätzen vorhanden ist:
69,5 ± 2 Gew.-% Trifluoriodmethan (CF₃I);
9 ± 2 Gew.-% 1,1,1,2-Tetrafluorpropen (HFO-1234yf); und
21,5 ± 0,5 Gew.-% Difluormethan (HFC-32).

2. Kältemittel nach Anspruch 1, umfassend mindestens etwa 98,5 Gew.-% der besagten drei Verbindungen, wobei jede Verbindung in den folgenden relativen Prozentsätzen vorhanden ist:
69,5 Gew.-% Trifluoriodmethan (CF₃I);
9 Gew.-% 1,1,1,2-Tetrafluorpropen (HFO-1234yf); und
21,5 Gew.-% Difluormethan (HFC-32).

3. Kältemittel nach einem der vorstehenden Ansprüche, bestehend aus besagten drei Verbindungen.

4. Wärmeübertragungszusammensetzung, umfassend das Kältemittel nach einem der vorstehenden Ansprüche.

5. Wärmeübertragungszusammensetzung nach Anspruch 4, ferner umfassend einen Stabilisator, ausgewählt aus einem alkylierten Naphthalin, einer dienbasierten Verbindung, einer Phenolverbindung und Kombinationen aus zwei oder mehr davon, und ein Schmiermittel, ausgewählt aus der Gruppe bestehend aus Polyolestern (POE), Mineralöl, Alkylbenzolen (AB) und Polyvinylethern (PVE).

6. Verfahren zur Wärmeübertragung vom Typ umfassend das Verdampfen von Kältemittelflüssigkeit zum Herstellen eines Kältemitteldampfes, das Komprimieren mindestens eines Teils des Kältemitteldampfes in einem Kompressor und das Kondensieren des Kältemitteldampfes, wobei besagtes Verfahren umfasst:
(a) Bereitstellen eines Kältemittels, wie in einem der Ansprüche 1 bis 3 definiert;
(b) Verdampfen des besagten Kältemittels bei einer Temperatur von -40 °C bis + 10°C.

7. Verfahren nach Anspruch 6, ferner umfassend das Bereitstellen eines Schmiermittels für den besagten Kompressor und das Aussetzen mindestens eines Teils des besagten Kältemittels und/oder mindestens eines Teils des besagten Schmiermittels einem Sequestrierungsmaterial, umfassend:
i. aktiviertes Aluminiumoxid, oder
ii. ein Zeolith-Molekularsieb, umfassend Kupfer, Silber, Blei oder eine Kombination davon, oder
iii. ein Anionenaustauscherharz, oder
iv. ein feuchtigkeitsentfernendes Material, vorzugsweise ein feuchtigkeitsentfernendes Molekularsieb, oder
v. eine Kombination aus zwei oder mehr der oben genannten.

8. Wärmeübertragungssystem vom Typ umfassend einen Verdampfer, einen Kompressor und ein Kältemittel in dem System, wobei das System umfasst:
(a) besagtes Kältemittel entsprechend einem der Ansprüche 1 bis 3; und
(a) ein Sequestrierungsmaterial, umfassend:
i. aktiviertes Aluminiumoxid, und
ii. ein Zeolith-Molekularsieb, umfassend Kupfer, Silber, Blei oder eine Kombination davon, und
iii. ein Anionenaustauscherharz, und
iv. ein feuchtigkeitsentfernendes Material, vorzugsweise ein feuchtigkeitsentfernendes Molekularsieb.

9. Verwendung einer Wärmeübertragungszusammensetzung entsprechend Anspruch 4 oder Anspruch 5 zum Ersetzen von R-404A oder R-22 für Heiz- und Kühlanwendungen in Mittel- und Niedertemperatur-Kältemittelsystemen.

10. Verwendung einer Wärmeübertragungszusammensetzung entsprechend Anspruch 4 oder Anspruch 5 in einem Wärmeübertragungssystem.

## Revendications

1. Réfrigérant comprenant au moins environ 98,5 % en poids des trois composés suivants, chaque composé étant présent dans les pourcentages relatifs suivants :
69,5 ± 2 % en poids de trifluoroiodométhane (CF₃I) ;
9 ± 2 % en poids de 1,1,1,2-tetrafluoropropène (HFO-1234yf); et
21,5 ± 0,5% en poids de difluorométhane (HFC-32).

2. Réfrigérant selon la revendication 1, comprenant au moins environ 98,5 % en poids desdits trois composés suivants chaque composé étant présent dans les pourcentages relatifs suivants :
69,5 % en poids de trifluoroiodométhane (CF₃I) ;
9 % en poids de 1,1,1,2-tetrafluoropropène (HFO-1234yf) ; et
21,5 % en poids de difluorométhane (HFC-32).

3. Réfrigérant selon une quelconque revendication précédente, consistant desdits trois composés.

4. Composition de transfert thermique comprenant le réfrigérant d'une quelconque revendication précédente.

5. Composition de transfert thermique selon la revendication 4, comprenant en outre un stabilisant choisi parmi un naphtalène alkylé, un composé à base de diène, un composé de phénol et des combinaisons d'au moins deux de ceux-ci, et un lubrifiant choisi parmi le groupe constitué par les esters de polyol (POE), l'huile minérale, les alkylbenzènes (AB) et polyvinyl ethers (PVE).

6. Procédé de transfert de chaleur du type comprenant l'évaporation d'un liquide réfrigérant pour produire une vapeur réfrigérante, la compression dans un compresseur d'au moins une partie de la vapeur réfrigérante et la condensation de la vapeur réfrigérante, ledit procédé comprenant :
(a) la fourniture d'un réfrigérant selon l'une quelconque des revendications 1 à 3 ;
(b) l'évaporation dudit réfrigérant à une température de -40 °C à +10 °C.

7. Procédé selon la revendication 6, comprenant en outre la fourniture d'un lubrifiant pour ledit compresseur et l'exposition d'au moins une partie dudit réfrigérant et/ou d'au moins une partie dudit lubrifiant à un matériau de séquestration comprenant :
i. de l'alumine activée, ou
ii. d'un tamis moléculaire en zéolite comprenant du cuivre, de l'argent, du plomb ou une combinaison de ceux-ci, ou
iii. une résine échangeuse d'anions, ou
iv. un matériau éliminant l'humidité, de préférence un tamis moléculaire éliminant l'humidité, ou
v. une combinaison de deux ou plusieurs des éléments ci-dessus.

8. Système de transfert de chaleur du type comprenant un évaporateur, un compresseur et un réfrigérant dans le système, ledit système comprenant :
(a) ledit réfrigérant étant conforme à l'une quelconque des revendications 1 à 3; et
(a) un matériau de séquestration comprenant :
i. de l'alumine activée, et
ii. un tamis moléculaire en zéolite comprenant du cuivre, de l'argent, du plomb ou une combinaison de ceux-ci, et
iii. une résine échangeuse d'anions, et
iv. un matériau éliminant l'humidité, de préférence un tamis moléculaire éliminant l'humidité.

9. Utilisation d'une composition de transfert thermique selon la revendication 4 ou la revendication 5, pour remplacer le R-404A ou le R-22 pour des applications de chauffage et de refroidissement dans des systèmes réfrigérants à moyenne et basse température.

10. Utilisation d'une composition de transfert thermique selon la revendication 4 ou la revendication 5, dans un système de transfert thermique.
